# EUROPEAN PATENT SPECIFICATION

(11) **EP 4 502 705 B1**
(45) Date of publication and mention of the grant of the patent: **29.04.2026**
(21) Application number: 23799559.2
(22) Date of filing: 15.03.2023
(51) Int. Cl.: G02B 27/01, G02C 7/08, G06F 1/16

(54) **WEARABLE ELECTRONIC DEVICE**
TRAGBARE ELEKTRONISCHE VORRICHTUNG
DISPOSITIF ÉLECTRONIQUE HABITRONIQUE

(30) Priority: 03.05.2022 KR 20220054594; 09.06.2022 KR 20220070210
(43) Date of publication of application: 05.02.2025
(73) Proprietor: Samsung Electronics Co., Ltd., Suwon-si, Gyeonggi-do 16677 (KR)
(72) Inventor: LEE, Seunghoon, Suwon-si Gyeonggi-do 16677 (KR); YANG, Soonwoong, Suwon-si Gyeonggi-do 16677 (KR); IM, Jongkyun, Suwon-si Gyeonggi-do 16677 (KR)
(74) Representative: Appleyard Lees IP LLP
(86) International application number: PCT/KR2023/003436
(87) International publication number: WO 2023/214676

(56) References cited:
- WO-A1-2021/069930
- KR-A- 20190 028 967
- KR-A- 20210 130 485
- US-A1- 2015 138 645
- US-A1- 2020 400 948

## Description

### [Technical Field]

Various embodiments disclosed in this document relate to a wearable electronic device.

### [Background Art]

Augmented reality (AR) may be a technology of projecting a virtual image onto a physical space of the real world or a real object and displaying them as one image. Augmented reality may display a virtual image overlaid on a real space, and be used to provide information about an object of the real space and the virtual image.

Wearable electronic devices may include various types of electronic devices that may be worn by users. For example, the electronic devices may include glasses-shaped augmented reality glasses worn on the user's face, a head mounted display apparatus (HMD) worn on the head, or augmented reality helmet type smart glasses.

The wearable electronic device may provide an augmented reality scene of displaying visual information (example: a virtual image) overlaid on what a wearer actually sees (example: an actual image) or displaying information about an object of a real space and the virtual image to the wearer.

Prior art KR 2021 0130485 A1 discloses a wearable electronic device wherein a lens element is adjustable with respect to a display.

### [Disclosure of Invention]

### [Technical Problem]

The wearable electronic device may include a prescription lens so as to correct a user's eyesight. When the prescription lens is attached to the electronic device by using a magnet, an area of a display region may decrease and an area of a black mask (BM) region may increase due to a space where the magnet is disposed. Accordingly, the aesthetics of the electronic device may be deteriorated.

Also, when the prescription lens is attached to the electronic device by using the magnet, it may be difficult for a user to adjust a focal length of the prescription lens.

### [Solution to Problem]

A wearable electronic device according to various embodiments of the disclosure may include a first member including at least one display and at least one first gear part, and a second member configured to dispose at least one second gear part at least partially coupled to the at least one first gear part, and at least one prescription lens disposed between the at least one display and a user's body, and the second member may be disposed such that the distance between the at least one display and the at least one prescription lens is adjusted according to a position at which the at least one second gear part is coupled to the at least one first gear part.

A wearable electronic device according to various embodiments of the disclosure may include a first member including a main frame including at least one display, a first extension part extending from one end of the main frame in a first direction and including a first gear part on one surface, and a second extension part extending from the other end of the main frame in the first direction and including a third gear part disposed to face the first gear part on one surface, and a second member is configured to dispose a second gear part at least partially coupled to the first gear part, a fourth gear part at least partially coupled to the third gear part, and at least one prescription lens disposed between the at least one display and a user's body, and the second member may be disposed such that the distance between the at least one display and the at least one prescription lens is adjusted according to at least one of a position at which the second gear part is coupled to the first gear part or a position at which the fourth gear part is coupled to the third gear part.

### [Advantageous Effects of Invention]

Various embodiments disclosed in this document may provide an electronic device that provides an augmented reality scene with aesthetics improved by disposing a prescription lens to be attachable to and detachable from a region other than a display region.

Also, various embodiments disclosed in this document may provide a wearable electronic device that may allow a user to adjust a focal length of a prescription lens.

In addition, various effects directly or indirectly identified through this document may be provided.

### [Brief Description of Drawings]

FIG. 1 is a perspective view of an electronic device according to an embodiment.
FIG. 2 is an exploded perspective view of an electronic device according to an embodiment.
FIG. 3 is a perspective view illustrating a first member according to an embodiment.
FIG. 4 is a perspective view and a cross-sectional view illustrating a second member according to an embodiment.
FIG. 5 is a perspective view illustrating an electronic device in which a first member is coupled to a second member, according to an embodiment.
FIG. 6A is a cross-sectional view of an electronic device according to an embodiment.
FIG. 6B is a cross-sectional perspective view of an electronic device according to an embodiment.
FIG. 7 is a plan view and a perspective view illustrating a first surface of a gear member according to an embodiment.
FIG. 8 is a plan view and a perspective view illustrating a second surface of a gear member according to an embodiment.
FIG. 9 is a cross-sectional view illustrating a state in which a second member is separated from a first member, according to an embodiment.
FIG. 10 is a perspective view illustrating a gear member disposed on a first member, according to an embodiment.
FIG. 11 is a cross-sectional perspective view illustrating a gear member disposed on a first member, according to an embodiment.
FIG. 12 is a perspective view illustrating a state in which a first member on which a gear member including a protrusion structure is disposed is coupled to a second member, according to an embodiment.
FIG. 13 is a cross-sectional view of FIG. 12.
FIG. 14 is a perspective view illustrating a state in which a first member on which a gear member including a protrusion structure is disposed is coupled to a second member, according to an embodiment.
FIG. 15 is a plan view illustrating a gear member including a protrusion structure according to an embodiment.
FIG. 16 is a block diagram of an electronic device in a network environment, according to various embodiments.

In relation to the description of the drawings, identical or similar reference numerals may be used for identical or similar components.

### [Mode for the Invention]

Various embodiments of the disclosure are described below with reference to the accompanying drawings. However, these are not intended to limit the disclosure to specific embodiment forms, and should be understood as including various modifications, equivalents, and/or alternatives of the embodiments of the disclosure.

Also, the terms used in the disclosure are merely used to describe specific embodiments and are not intended to limit the disclosure. An expression of singularity includes a meaning of plurality, unless the context clearly indicates the singularity. Also, throughout the specification, when a part is said to be "connected" to another part, this includes not only a case where it is "directly connected" but also a case where it is "electrically connected" with another element located therebetween. Also, when a part is said to "include" a certain component, this means that it may further include other components, rather than excluding other components, unless specifically stated to the contrary.

"The" used in this specification, particularly, in the patent claims and a similar indicator may refer to all of singularity and plurality. Also, if there is no description clearly specifying the order of steps describing a method of the disclosure, the steps described may be performed in any suitable order. The disclosure is not limited in the order of description of the steps described.

In the disclosure, 'augmented reality (AR)' may mean displaying a virtual image in a physical environment space of the real world together or displaying a real object (e.g., a subject recognized in an image acquired through a camera) and a virtual image together. An 'augmented reality scene' may mean a scene in which the virtual image is displayed in the physical environment space of the real world together, or the real object and the virtual image are displayed together.

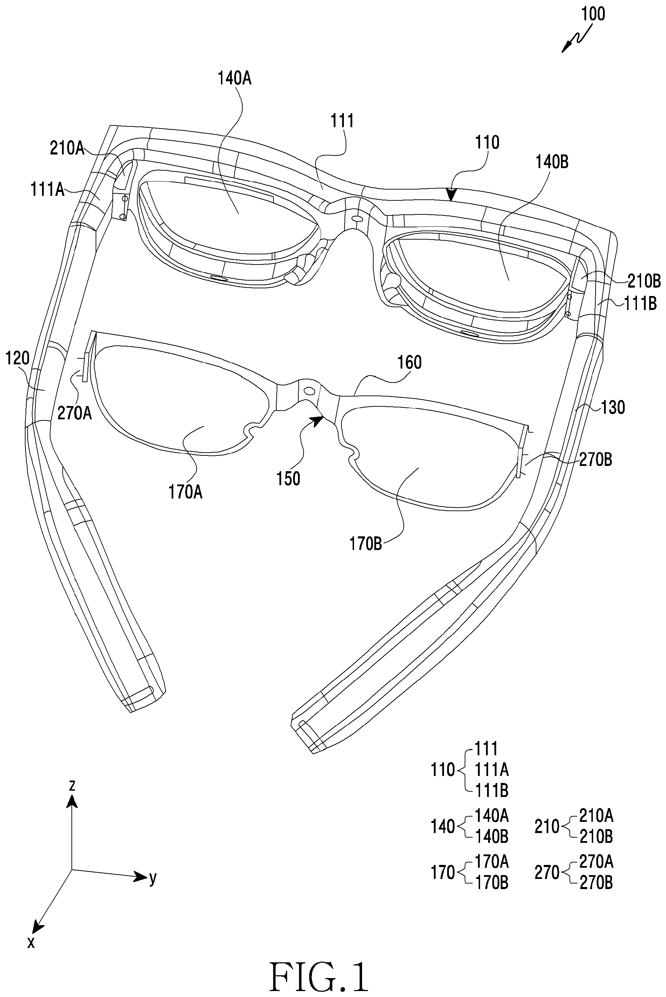

In addition, an 'augmented reality device (e.g., an electronic device 100 of FIG. 1)' is a device that may express 'augmented reality', and may generally include not only glasses-shaped augmented reality glasses worn on the user's face, but also a head mounted display apparatus (HMD) or an augmented reality helmet worn on the head. However, the augmented reality device is not limited to this. For example, the augmented reality device may include a portable communication device (example: a smartphone) that captures an image with a camera and displays a screen obtained by overlapping an augmented reality object on the captured image, a computer device, a portable multimedia device, a portable medical device, a camera, a wearable device, or a home appliance device.

Meantime, a 'real scene' is a scene of the real world that a user sees through the augmented reality device, and may include a real world object. Also, a 'virtual image' is an image created through an optical engine and may include all of a static image and a dynamic image. This virtual image is observed together with the real scene, and may include an image that represents information about the real world object in the real scene, information about the operation of the augmented reality device, or a control menu.

Therefore, a general augmented reality device (e.g., the electronic device 100) may have an optical engine for generating a virtual image composed of light generated from a light source, and a wave guide that guides the virtual image generated by the optical engine to the user's eyes and is made of transparent materials such that a scene of the real world may be also seen together. As mentioned above, the augmented reality device must be able to observe the scene of the real world, so an optical element for changing a path of light basically having straightness may be required to guide light generated by the optical engine to the user's eyes through the wave guide. At this time, the path of light may be also changed using reflection by a mirror, and the path of light may be also changed through diffraction by a diffractive element such as a diffractive optical element (DOE) or a holographic optical element (HOE). However, it is not limited to this.

The disclosure will be described below in detail with reference to the accompanying drawings.

FIG. 1 is a perspective view of an electronic device 100 according to an embodiment.

Referring to FIG. 1, the electronic device 100 may include a first member 110 and a second member 150 detachably coupled to the first member 110. According to an embodiment, the electronic device 100 may include an electronic device that may be worn by a user. For example, the electronic device 100 may include not only glasses-shaped augmented reality glasses worn on the user's face, but also a head mounted display apparatus (HMD) worn on the head or an augmented reality helmet. However, it is not limited to this. The electronic device 100 according to various embodiments of this document describes a glasses-type augmented reality electronic device as a main scenario, but is not limited thereto. Various embodiments of this document may be applied to various electronic devices including a near to eye display. For example, various embodiments of this document may be also applied to goggle-type augmented reality glasses. The near to eye display may be understood as a display type that a user may wear like glasses in that a display panel is located very close to the user's eyes.

According to an embodiment, the first member 110 may be smart glasses. For example, the first member 110 may be wearable computer glasses that provide augmented reality adding visual information alongside or to what a wearer sees. Augmented reality may blend digital objects with the physical world. Augmented reality may provide a variety of image information by overlaying a virtual image on an actual space or thing. For example, in a mode related to augmented reality, the first member 110 may cause an image (example: a virtual image) to appear on at least one display 140, and allow a wearer to see the image superimposed on a foreground (example: an actual image) in front of the wearer's eyes. According to an embodiment, augmented reality may be referred to as a see-through function or a see-through mode. The operation of superimposing information onto a wearer's field of view in order to provide augmented reality may be implemented in various ways according to the type of the at least one display 140.

According to an embodiment, the first member 110 may include a main frame 111, a first support frame 120 connected to the main frame 111 through a first extension part 111A, a second support frame 130 connected to the main frame 111 through a second extension part 111B, the at least one display 140, and at least one gear part 210. However, the components of the first member 110 are not limited to this. The first member 110 may omit at least one of the above-described components or may further include at least one other component. For example, the first member 110 may further include various other structures that may be mounted on the head, such as straps or helmets connected to the main frame 111, except for at least one of the first support frame 120 or the second support frame 130.

According to an embodiment, when a user wears the electronic device 100, the main frame 111 may block a user's field of view or may be put in a path of the user's field of view. For example, when the user wears the electronic device 100, the main frame 111 may cover at least a part of the user's face.

According to an embodiment, the end of the first support frame 120 may be formed in a shape of being curved behind the left ear such that the end of the first support frame 120 may be put on the left ear. The end of the second support frame 130 may be formed in a shape of being curved behind the right ear such that the end of the second support frame 130 may be put on the right ear. However, it is not limited to this.

According to an embodiment, the first extension part 111A may physically connect the main frame 111 to the first support frame 120. The first extension part 111A may extend from one end of the main frame 111 in a first direction (e.g., a +x-axis direction). The first extension part 111A may be formed such that the main frame 111 and the first support frame 120 may rotate within a specified range around the first extension part 111A. For example, by including a hinge structure, the first extension part 111A may be formed to fix the main frame 111 to the first support frame 120, and rotate the main frame 111 and the first support frame 120 around the first extension part 111A. The above description of the first extension part 111A may be equally applied to the second extension part 111B except for the direction of rotation. For example, the second extension part 111B may extend from the other end of the main frame 111 in the first direction.

According to an embodiment, the display 140 that provides an augmented reality scene may be disposed on the main frame 111. The electronic device 100 may display an augmented reality image through the display 140. For example, the display 140 may transmit light of the actual environment (or a real object), and the user may recognize the light of the actual environment transmitted through the display 140. In an example, the display 140 may include a transparent display that may transmit the light of the real object and simultaneously display an image of a virtual object. For example, the electronic device 100 may display the image of the virtual object through the display 140, and the user may recognize the real object and the virtual object through the display 140 of the electronic device 100. Accordingly, the electronic device 100 may provide augmented reality to the user.

According to an embodiment, the display 140 may include at least one of a first display 140A for a left eye image or a second display 140B for a right eye image. The at least one of the first display 140A for the left eye image or the second display 140B for the right eye image may be disposed on the main frame 111. According to an embodiment, the at least one of the first display 140A or the second display 140B may include any one of a near to eye display (NED) or a head mounted display (HMD). For example, at least a portion of the electronic device 100 may include a light waveguide, and one region of the light waveguide may include a see-through display. The see-through display may be located very close to the user's eyes, and the user may wear the electronic device 100 including the see-through display like glasses. According to an embodiment, at least a portion of the electronic device 100 may include a projector that may project light and recognize a thing through reflected light.

According to an embodiment, the display 140 may include transparent materials such as a glass plate, glass, or plastic. However, it is not limited to this. For example, the display 140 may include translucent materials such as polymer.

According to an embodiment, the second member 150 may include a member that may correct the eyesight of the wearer of the electronic device 100. For example, the second member 150 may include a lens frame 160, at least one lens 170, and at least one second gear part 270A. The at least one lens 170 may include a prescription lens that may correct the user's eyesight. For example, the at least one lens 170 may include sunglasses and/or UV protection lenses. The components of the second member 150 are not limited to the components described above. For example, the second member 150 may omit at least one of the above-mentioned components or may further include at least one other component.

According to an embodiment, the at least one lens 170 (example: a prescription lens) may include a first lens 170A corresponding to the first display 140A and a second lens 170B corresponding to the second display 140B. The first lens 170A may be fitted into the lens frame 160, based on the eyesight of the user's left eye. The second lens 170B may be fitted into the lens frame 160, based on the eyesight of the user's right eye. At least one of the first lens 170A or the second lens 170B may be manufactured based on an inter pupillary distance (IPD) (example: a distance of a line connecting the pupil centers of both eyes). The first lens 170A may be manufactured such that an optical center point (e.g., a position at which light passes without being bent) is aligned with the pupil center of the left eye. The second lens 170B may be manufactured such that an optical center point is aligned with the pupil center of the right eye. According to an embodiment, the distance between the optical center point of the first lens 170A and the optical center point of the second lens 170B may be the same as the IPD. Owing to this, a wearer's visual discomfort such as blurriness and dizziness may be reduced.

According to an embodiment, the second member 150 may be attachable to and detachable from the first member 110. The first member 110 may include at least one gear part 210. The second member 150 may include at least one gear part 270 that may be at least partially coupled to the at least one gear part 210. The at least one gear part 270 is at least partially coupled to the at least one gear part 210, whereby the second member 150 may be coupled to the first member 110. The at least one gear part 270 is separated from the at least one gear part 210, whereby the second member 150 may be separated from the first member 110.

According to an embodiment, the distance between the at least one display 140 and the at least one lens 170 may be adjusted according to a position at which the second member 150 is coupled to the first member 110. For example, the distance between the at least one display 140 and the at least one lens 170 may be adjusted according to a position (or degree) at which the at least one gear part 270 is coupled to the at least one gear part 210.

According to an embodiment, the first member 110 may include a first gear part 210A disposed at one end (or one region of the first extension part 111A) of the main frame 111 and a third gear part 210B disposed at the other end (or one region of the second extension part 111B) of the main frame 111. According to an embodiment, the second member 150 may include a second gear part 270A at least partially coupled to the first gear part 210A and a fourth gear part 270B at least partially coupled to the third gear part 210B. However, it is not limited to this.

As illustrated in FIG. 1, the first member 110 includes the first gear part 210A and the third gear part 210B at side surfaces of both ends of the main frame 111, and the second member 150 includes the second gear part 270A and the fourth gear part 270B at side surfaces of both ends of the lens frame 160, but are not limited thereto. For example, the first member 110 may include at least one first gear part at a nose pad that is part supporting the main frame 111 above the user's nose, and the second member 150 may also include at least one second gear part in a region corresponding to the nose pad. In an example, the at least one first gear part may be disposed on at least one of an upper end or lower end of the main frame 111 surrounding the at least one display 140, and the at least one second gear part may be also disposed on at least one of an upper end or lower end of the lens frame 160 surrounding the at least one lens 170.

According to an embodiment, the first member 110 is not limited to a shape shown in FIG. 1. For example, the main frame 111 of the first member 110 may include a shape of surrounding at least part of a periphery of the first display 140A. For example, the main frame 111 may be in a shape of surrounding at least part of an upper end of the first display 140A, or may be in a shape of surrounding at least part of a lower end of the first display 140A. This may be equally applied to the second display 140B as well.

According to an embodiment, the second member 150 is not limited to the shape shown in FIG. 1. For example, the lens frame 160 of the second member 150 may include a shape of surrounding at least part of the first lens 170A. For example, the lens frame 160 may be in a shape of surrounding a lower end of the first lens 170A. In an example, the lens frame 160 may also include a shape of surrounding the entire of the first lens 170A. This may be equally applied to the second lens 170B as well.

According to an embodiment, the first member 110 may include materials such as plastic for wearability. However, it is not limited to this. For example, the first member 110 may include various materials such as metal in consideration of strength or aesthetics. According to an embodiment, the first member 110 may be formed of materials that may increase the dispersion of heat generated from electronic components (e.g., processors) of the electronic device 100 or reduce a heat of the electronic device 100. For example, the first member 110 may also include at least one of aluminum, magnesium, or stainless steel.

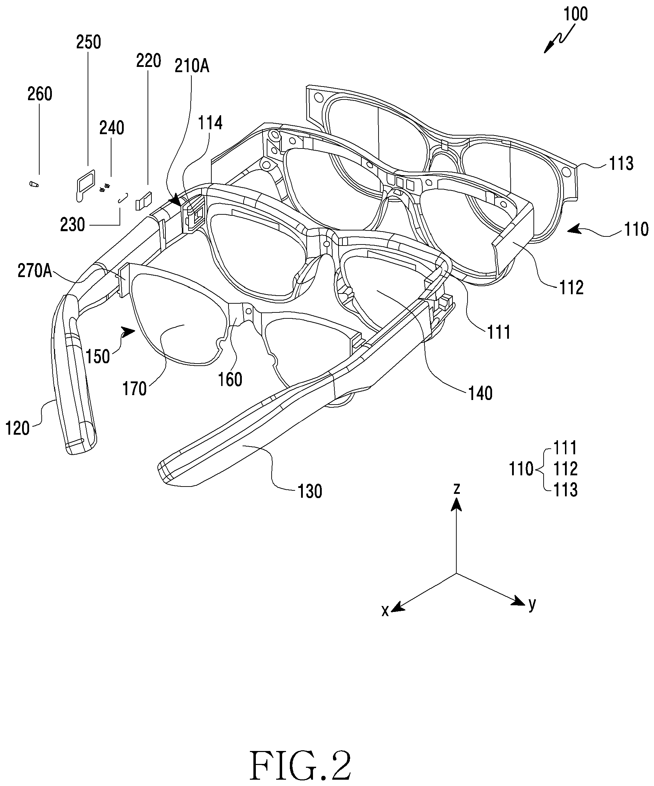

FIG. 2 is an exploded perspective view of an electronic device 100 according to an embodiment.

The electronic device 100 of FIG. 2 may be referred by the electronic device 100 of FIG. 1. The same reference numerals are used for components that are the same or substantially the same as those described above, and descriptions previously given are omitted.

Referring to FIG. 2, a first member 110 may further include a cover member 112 covering at least part of a main frame on which at least one display 140 is disposed, and a window member 113 disposed in front of the cover member 112. However, it is not limited to this. The first member 110 may omit at least one component among the above-described components or may further include at least one component as well.

Referring to FIG. 2, a first gear part 210A according to an embodiment may include a recess 114 in which various parts (e.g., a gear member 220) may be disposed. The recess 114 may be a space that is formed by the first gear part 210A and at least part of the cover member 112 as the first gear part 210A protrudes in one direction (e.g., a y-axis direction).

According to an embodiment, the recess 114 may accommodate at least one gear member 220, at least one hinge structure 230, and at least one elastic member 240 disposed between the at least one gear member 220 and a cover 250.

According to an embodiment, in a state in which the components are accommodated in the recess 114, the cover 250 may be coupled to the main frame 111 by using a screw 260. However, it is not limited to this.

According to an embodiment, the window member 113 may include a shape corresponding to the at least one display 140. The window member 113 may include at least one tintable lens. However, it is not limited to this.

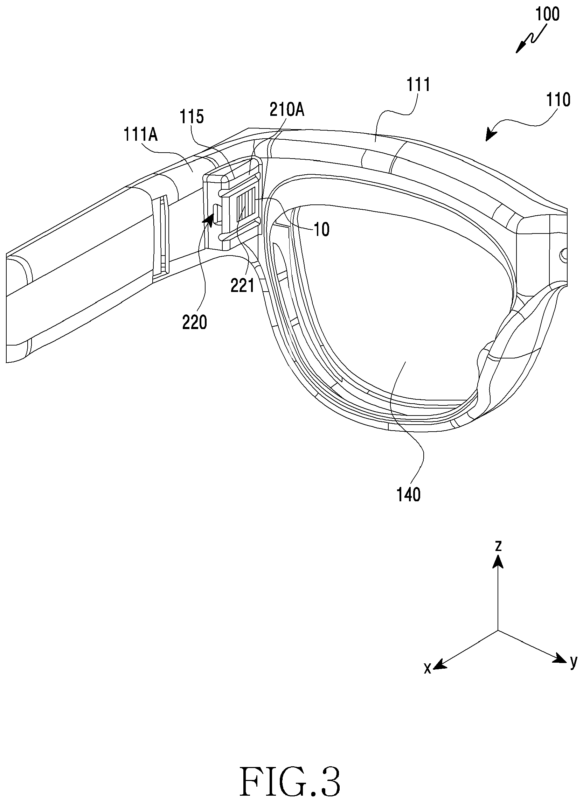

FIG. 3 is a perspective view illustrating a first member 110 according to an embodiment.

The first member 110 of FIG. 3 may be referred by the first member 110 of FIGS. 1 and 2. The same terms or reference numerals are used for components that are the same or substantially the same as those described above, and descriptions previously given are omitted.

Although FIG. 3 illustrates only a portion of the left side of the electronic device 100, the description of FIG. 3 may also be applied to a right portion of the electronic device 100. For example, the right portion of the electronic device 100 may include a shape that is symmetrical to a left portion of the electronic device 100 with respect to the main frame 111. However, it is not limited to this.

Referring to FIG. 3, at least one first gear part 210A may be disposed at one end (or a first extension part 111A) of the main frame 111. The at least one first gear part 210A may include a recess (not shown). By including a housing shape of protruding from one surface of the first extension part 111A in a direction toward a second extension part (111B of FIG. 1), the first gear part 210A may form the recess. At least part of the at least one gear member 220 may be accommodated inside the recess.

Referring to FIG. 3, according to an embodiment, at least part of the gear member 220 may be accommodated inside the first gear part 210A, and the remaining part may be exposed to the outside of the electronic device 100. For example, the first gear part 210A may include at least one opening part leading from the inside of the electronic device 100 to the outside of the electronic device 100. The remaining part of the gear member 220 may be exposed to the outside of the electronic device through the at least one opening part 10. For example, a plurality of protrusions 221 of the gear member 220 may be exposed to the outside of the electronic device 100 through the first opening part 10.

According to an embodiment, the at least one first gear part 210A may include at least one guide groove 115. Referring to FIG. 3, the at least one guide groove 115 may include a first guide groove and a second guide groove. The first guide groove may be formed at an upper end (e.g., a +z-axis direction) of the plurality of protrusions 221 exposed through the first opening part 10, and the second guide groove may be formed at a lower end of the plurality of protrusions 221. However, it is not limited to this. For example, the at least one guide groove may omit one of the first guide groove or the second guide groove.

According to an embodiment, the at least one guide groove 115 may be disposed with a longitudinal direction given as a direction (e.g., an x-axis direction) in which a second member (the second member 150 of FIG. 1) moves with respect to the first member 110. For example, the at least one guide groove 115 may be disposed with a longitudinal direction given as a direction from at least one lens (the at least one lens 170 of FIG. 1) toward at least one display 140 in a state in which the second member (the second member 150 of FIG. 1) is coupled to the first member 110.

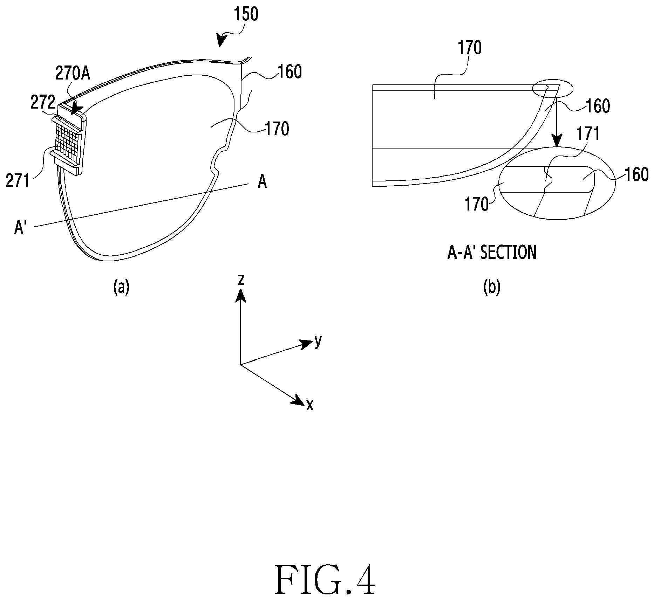

FIG. 4 is a diagram illustrating a second member 150 according to an embodiment.

FIG. 4(a) is a perspective view illustrating the second member 150 according to an embodiment. FIG. 4(b) is a cross-sectional view of the second member 150 taken along line A-A' of FIG. 4(a). Although FIG. 4(a) illustrates only a left portion of the second member 150, the description of FIG. 4 may also be applied to a right portion of the second member 150. For example, the right portion of the second member 150 may include a shape that is symmetrical to the left portion of the second member 150 with respect to the center (e.g., a nose pad portion) of a lens frame 160. However, it is not limited to this.

The second member 150 of FIG. 4 may be referred by the second member 150 of FIGS. 1 and 2. The same terms or reference numerals are used for components that are the same or substantially the same as those described above, and descriptions previously given are omitted.

Referring to FIG. 4(a), the second member 150 may include at least one second gear part 270A. The at least one second gear part 270A may be formed at one end of the lens frame 160. For example, the at least one second gear part 270A may be part that extends from one end of the lens frame 160 in a first direction (e.g., +x-axis direction).

According to an embodiment, the at least one second gear part 270A may include a plurality of accommodating grooves 271. For example, the at least one second gear part 270A may include the plurality of accommodating grooves 271 on a surface that faces a first gear part 210A in a state in which the second member 150 is coupled to a first member (the first member 110 of FIG. 3).

According to an embodiment, the plurality of accommodating grooves 271 may accommodate a plurality of protrusions (the plurality of protrusions 221 of FIG. 3) of a gear member (220 of FIG. 3). For example, the plurality of accommodating grooves 271 may include shapes corresponding to the plurality of protrusions. However, it is not limited to this. In an example, the at least one second gear part 270A may include a plurality of protrusions, and the gear member may also include a plurality of accommodating grooves accommodating at least some of the plurality of protrusions.

According to an embodiment, the second member 150 may include at least one protrusion part 272. For example, the at least one protrusion part 272 may include a first protrusion part disposed at an upper end of the plurality of accommodating grooves 271 and a second protrusion part disposed at a lower end of the plurality of accommodating grooves 271. However, it is not limited to this. For example, the at least one protrusion part 272 may also omit one of the first protrusion part or the second protrusion part.

According to an embodiment, the at least one protrusion part 272 may be disposed with a longitudinal direction given as a direction (e.g., an x-axis direction) in which the second member 150 moves with respect to the first member (110 of FIG. 3). For example, the at least one protrusion part 272 may be disposed with a longitudinal direction given as a direction from at least one lens 170 toward at least one display (the display 140 of FIG. 3) in a state in which the second member 150 is coupled to the first member (110 of FIG. 3).

According to an embodiment, the at least one protrusion part 272 may be accommodated in at least one guide groove (the guide groove 115 of FIG. 3) of the first member (110 of FIG. 3). For example, the at least one protrusion part 272 may include a shape corresponding to the at least one guide groove. However, it is not limited to this.

In an example, the second member 150 may include at least one guide groove, and a first gear part (the first gear part 210A of FIG. 3) of the first member (the first member 110 of FIG. 3) may also include at least one protrusion part accommodated in the at least one guide groove.

Referring to FIG. 4(b), the at least one lens 170 may be at least partially surrounded by the lens frame 160. According to an embodiment, the at least one lens 170 may be fitted into the lens frame 160. The at least one lens 170 may include a fitting structure (or a press-fitting structure) 171 so as to be fitted into the lens frame 160. For example, a side surface portion of an edge of the at least one lens 170 may include a hook shape. The lens frame 160 may include a groove corresponding to the hook shape of the at least one lens 170. By including the fitting structure 171, the at least one lens 170 may reduce the separation of the at least one lens 170 from the lens frame 160. However, it is not limited to this. In an example, the at least one lens 170 may be also coupled to the lens frame 160 by using an adhesive member. For example, the at least one lens 170 may be coupled to the lens frame 160 by using a bond or adhesive. In an example, the at least one lens 170 may be formed integrally with the lens frame 160.

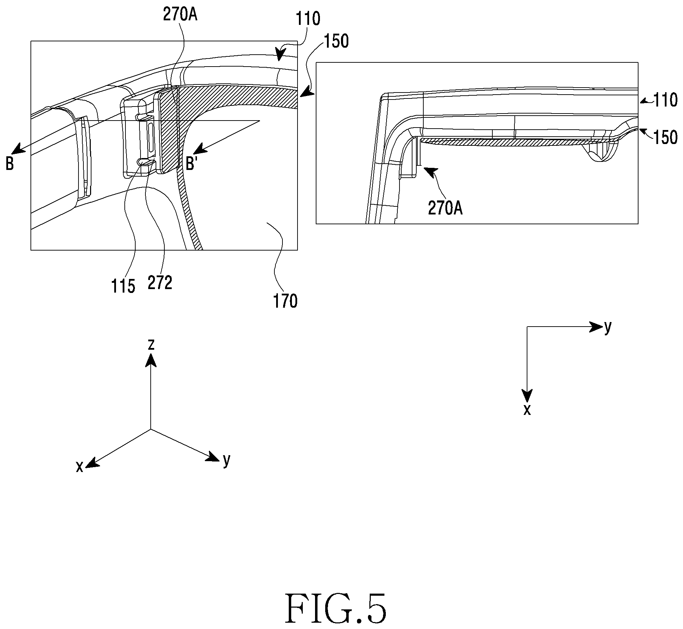

FIG. 5 is a perspective view of an electronic device 100 in which a second member 150 is coupled to a first member 110, according to an embodiment.

The first member 110 and the second member 150 of FIG. 5 may be referred by the first member 110 and the second member 150 of FIGS. 1 to 4. The same terms or the same reference numerals are used for components that are the same or substantially the same as those described above, and descriptions previously given are omitted.

Referring to FIG. 5, the second member 150 may be coupled to the first member 110. According to an embodiment, at least one protrusion part 272 of the second member 150 is accommodated in at least one guide groove 115 of the first member 110, whereby the second member 150 may be coupled to the first member 110. Although hidden by the second member 150 and not illustrated in FIG. 5, a plurality of accommodating grooves (the plurality of accommodating grooves 271 of FIG. 4) of the second member 150 accommodate a plurality of protrusions (the plurality of protrusions 221 of FIG. 3) of the first member 110, whereby the second member 150 may be coupled to the first member 110.

According to an embodiment, the at least one protrusion part 272 of the second member 150 may be accommodated in the at least one guide groove 115 of the first member 110 and be guided along the guide groove 115. For example, the at least one protrusion part 272 may be slid along the guide groove 115 in a longitudinal direction (e.g., an x-axis direction) of the guide groove 115 in a state in which the at least one protrusion part 272 is accommodated in the at least one guide groove 115. The at least one protrusion part 272 is accommodated and guided in the at least one guide groove 115, whereby the second member 150 may move. For example, the second member 150 moves, whereby a position at which the second member 150 is coupled to the first member 110 may change. Accordingly, the distance between at least one display and at least one lens may be adjusted.

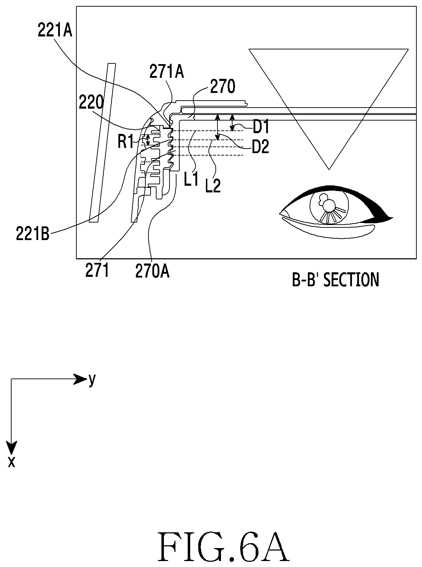

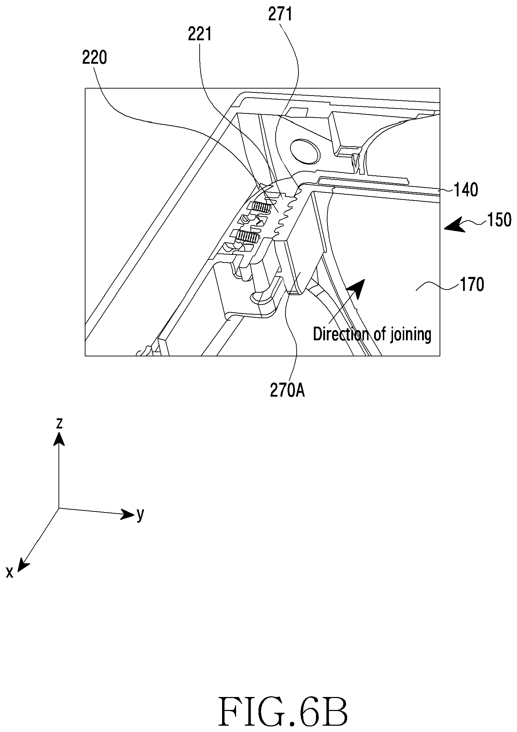

FIG. 6A is a cross-sectional view of an electronic device 100 according to an embodiment. FIG. 6B is a cross-sectional perspective view of the electronic device 100 according to an embodiment.

FIG. 6A is a cross-sectional view of FIG. 5 taken along line B-B' of FIG. 5, and FIG. 6B is a cross-sectional perspective view taken along line B-B' of FIG. 5.

The electronic device 100 of FIGS. 6A and 6B and its components (e.g., a first member 110 or a second member 150) may be referred by the electronic device 100 of FIGS. 1 to 5 and its components. The same terms or the same reference numerals are used for components that are the same or substantially the same as those described above, and descriptions previously given are omitted.

Referring to FIGS. 6A and 6B, a plurality of accommodating grooves 271 of the second member 150 accommodate a plurality of protrusions 221 of the first member 110, whereby the second member 150 may be coupled to the first member 110. For example, the plurality of accommodating grooves 271 may be at least partially in contact with the plurality of protrusions 221 in a state in which the second member 150 is coupled to the first member 110. The plurality of accommodating grooves 271 of the second member 150 accommodate the plurality of protrusions 221 of the first member 110, and at least one guide groove 115 accommodates at least one protrusion part 272, whereby the second member 150 may be fixed in a state of being coupled to the first member 110.

According to an embodiment, the distance (e.g., D1 or D2) between at least one display 140 and at least one lens 170 may be adjusted according to a position at which the second member 150 is coupled to the first member 110. For example, the distance between the at least one display 140 and the at least one lens 170 may be adjusted according to a position at which at least some of the plurality of protrusions 221 are accommodated in the plurality of accommodating grooves 271.

Referring to FIG. 6A for more detailed description, the plurality of protrusions 221 may include a first protrusion 221A and a second protrusion 221B spaced a first gap R1 apart from the first protrusion 221A. The plurality of accommodating grooves 271 may include a first accommodating groove 271A. Referring to FIG. 6A, the first accommodating groove 271A may be assumed as an accommodating groove that is closest to the display 140 based on the first member 110 in a state in which the second member 150 is coupled to the first member 110.

According to an embodiment, a first line L1 may indicate a position of the at least one lens 170 in a state in which the first protrusion 221A is coupled to the first accommodating groove 271A. The distance from the at least one lens 170 to the at least one display 140 in a state in which the first protrusion 221A is coupled to the first accommodating groove 271A may be a first distance D1.

According to an embodiment, a second line L2 may indicate a position of the at least one lens 170 in a state in which the second protrusion 221B is coupled to the first accommodating groove 271A. The distance from the at least one lens 170 to the at least one display 140 in a state in which the second protrusion 221B is coupled to the first accommodating groove 271A may be a second distance D2. According to an embodiment, a difference between the first distance D1 and the second distance D2 may be the first gap R1 that is a gap between the first protrusion 221A and the second protrusion 221B. However, it is not limited to this.

According to an embodiment, the distance between the at least one display 140 and the at least one lens 170 is adjusted, whereby a focal length of the lens may be adjusted. The focal length of the lens is adjusted, whereby a user may adjust such that the electronic device 100 may have a focal length suitable for the user. Accordingly, the usability of the electronic device 100 may be improved.

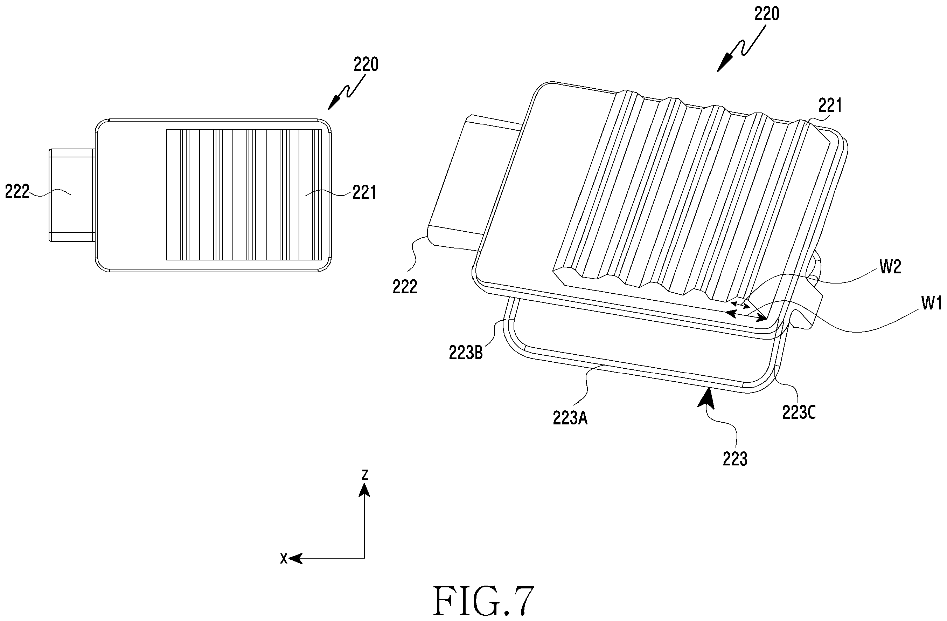

FIG. 7 is a plan view and a perspective view illustrating one surface of a gear member 220 according to an embodiment.

The gear member 220 of FIG. 7 may be referred by the gear member 220 of FIGS. 2 to 6B. The same terms or the same reference numerals are used for components that are the same or substantially the same as those described above, and descriptions previously given are omitted.

Referring to FIG. 7, the gear member 220 according to an embodiment may include a plurality of protrusions 221 formed on one surface, and at least one protrusion structure 222 protruding (in an +x-axis direction of FIG. 7) from one side. According to an embodiment, the gear member 220 may have a rectangular shape. For example, the gear member 220 may include one surface on which the plurality of protrusions 221 are formed, a surface opposite to the one surface and spaced a predetermined gap apart from the one surface, and a side surface surrounding the space between the one surface and the opposite surface. However, it is not limited to this.

According to an embodiment, the thickness (e.g., a thickness in the x-axis direction) of the plurality of protrusions 221 may decrease as it goes toward a direction (e.g., a +y-axis direction) in which the plurality of protrusions are protruded. For example, the plurality of protrusions 221 may include a first region, and a second region closer to a plurality of accommodating grooves than the first region in a state of being accommodated in the plurality of accommodating grooves (the accommodating groove 271 of FIG. 6A). The thickness W1 of the first region may be greater than the thickness W2 of the second region. However, it is not limited to this.

According to an embodiment, the plurality of protrusions 221 may include at least one inclined surface. For example, the plurality of protrusions 221 may include at least one inclined surface forming an inclination with respect to one surface of the gear member 220. In an embodiment, a cross-section of the plurality of protrusions 221 may include a triangular shape. For example, the cross-section of the plurality of protrusions 221 may include a right triangular or isosceles triangular shape. However, it is not limited to this. In an example, the cross-section of the plurality of protrusions 221 may also include a trapezoidal shape.

According to an embodiment, at least one surface of the plurality of protrusions 221 may include a curved shape. For example, at least part of the end of the plurality of protrusions 221 may include a curved shape. The end of the plurality of protrusions 221 may be stumpy. However, it is not limited to this.

According to an embodiment, the at least one protrusion structure 222 may protrude in a direction substantially perpendicular to a direction (e.g., an x-axis direction) in which the plurality of protrusions 221 protrude. For example, the at least one protrusion structure 222 may protrude from the side surface surrounding the space between the one surface including the plurality of protrusions 221 and the opposite surface. However, it is not limited to this.

According to an embodiment, the at least one protrusion structure 222 may extend from one side surface of the gear member 220. The at least one protrusion structure 222 may be a member separate from the gear member 220, or may be formed integrally with the gear member 220.

According to an embodiment, at least one hinge structure 223 may be disposed to be rotatable with respect to the gear member 220. The at least one hinge structure 223 may be disposed on a surface opposite to one surface of the gear member 220 on which the plurality of protrusions 221 are formed. However, it is not limited to this.

According to an embodiment, when referring to FIG. 7, the at least one hinge structure 223 may include a ring shape. For example, the at least one hinge structure 223 may include a first bar 223A, a second bar 223B extending to be substantially perpendicular to the first bar 223A at one end of the first bar 223A, a third bar 223C substantially perpendicular to the first bar 223A at the other end of the first bar 223A and substantially parallel to the second bar 223B, a first end extending to be substantially parallel to the first bar 223A at one end of the third bar 223C, and a second end extending to be substantially parallel to the first bar 223A at one end of the second bar 223B. According to an embodiment, the first bar 223A to third bar 223C, the first end, and the second end may be formed integrally. However, it is not limited to this.

According to an embodiment, the at least one hinge structure 223 may be fixed such that a portion of the ring is rotatable with respect to the gear member 220. For example, at least one of the first end or the second end may be caught by the gear member 220, thereby being fixed to be rotatable with respect to the gear member 220. However, it is not limited to this.

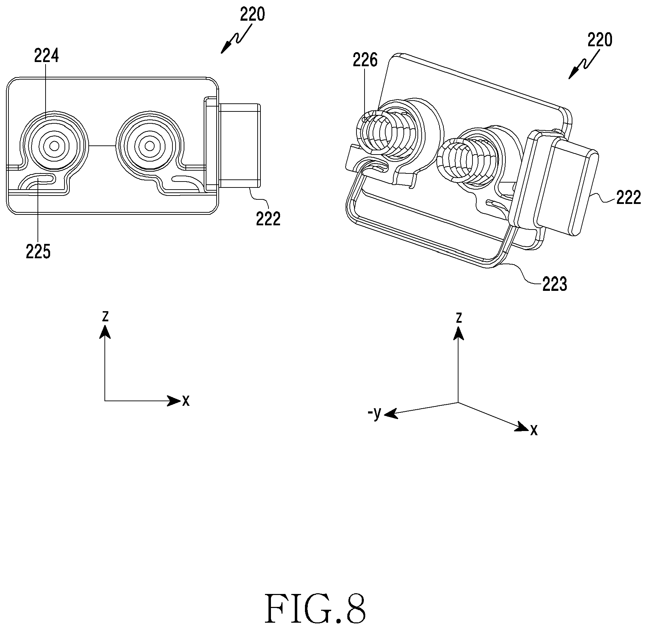

FIG. 8 is a plan view and a perspective view illustrating a surface opposite to one surface of the gear member 220 illustrated in FIG. 7, according to an embodiment.

The gear member 220 of FIG. 8 may be referred by the gear member 220 of FIGS. 2 to 7. The same terms or the same reference numerals are used for components that are the same or substantially the same as those described above, and descriptions previously given are omitted.

Referring to FIG. 8, the gear member 220 according to an embodiment may include at least one seating part 225 on which at least one hinge structure (the hinge structure 223 of FIG. 7) is disposed, and at least one seating groove 224 in which at least one elastic member 226 is disposed.

According to an embodiment, when at least one hinge structure 223 includes a ring shape (see the description of FIG. 7), at least one of a first end and a second end of the hinge structure 223 may be disposed on the at least one seating part 225. The first end and the second end are accommodated in the seating part 225, whereby the at least one hinge structure 223 may be fixed from the gear member 220. The at least one hinge structure 223 may be rotatably fixed from the gear member 220.

According to an embodiment, the at least one hinge structure 223 may be disposed with a rotation axis direction given as a direction (e.g., an x-axis direction) in which the protrusion structure 222 protrudes. However, it is not limited to this.

According to an embodiment, the at least one hinge structure 223 may be disposed with a longitudinal direction given as a direction (e.g., an x-axis direction) in which the protrusion structure 222 protrudes. However, it is not limited to this.

According to an embodiment, the at least one elastic member 226 may be disposed in the at least one seating groove 224. The at least one seating groove 224 may include a shape corresponding to the shape of the at least one elastic member 226. For example, referring to FIG. 8, when the elastic member 226 has a circular spring shape, the at least one seating groove 224 may include a circular groove. However, it is not limited to this. For example, the elastic member 226 may include various shapes such as a square or an oval.

In FIG. 8, it is illustrated that two elastic members 226 are disposed on the gear member 220, but are not limited thereto. For example, one elastic member or three or more elastic members may be disposed on the gear member 220.

According to an embodiment, the at least one elastic member 226 may include a spring or spring. However, it is not limited to this. For example, the at least one elastic member 226 may include various materials having elasticity, such as a rubber or a coil.

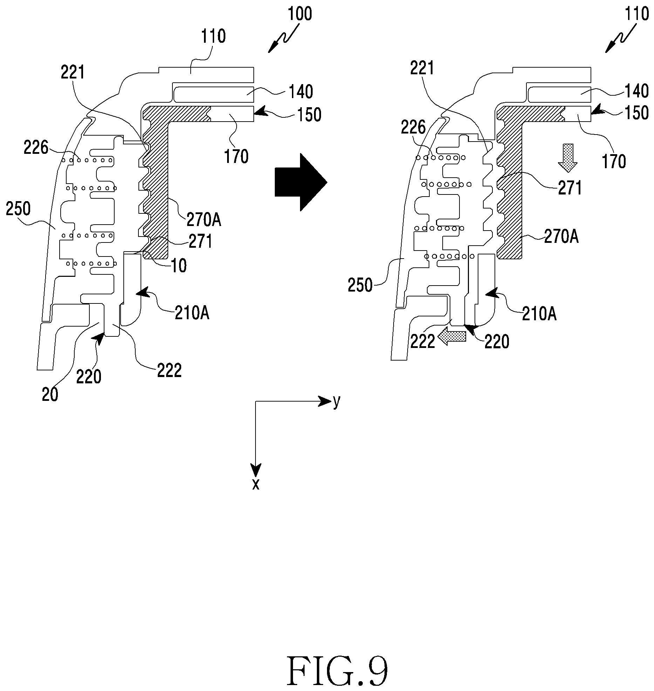

FIG. 9 is a cross-sectional view illustrating a state in which a second member 150 is separated from a first member 110, according to an embodiment.

The first member 110, the second member 150, and their components of FIG. 9 may be referred by the first member 110, the second member 150, and their components of FIGS. 1 to 8. The same terms or the same reference numerals are used for components that are the same or substantially the same as those described above, and descriptions previously given are omitted.

Referring to FIG. 9, at least part of a gear member 220 according to an embodiment may be accommodated inside an electronic device 100, and the remaining part may be exposed to the outside of the electronic device 100. For example, the gear member 220 may be accommodated within a space surrounded by a first gear part 210A and a cover 250. At least one of a plurality of protrusions 221 or a protrusion structure 222 of the gear member 220 may be at least partially exposed to the outside of the electronic device 100 through at least one opening part. For example, the plurality of protrusions 221 may be at least partially exposed to the outside of the electronic device 100 through a first opening part 10. The protrusion structure 222 of the gear member 220 may be at least partially exposed to the outside of the electronic device 100 through a second opening part 20. FIG. 9 illustrates only a left portion of the electronic device 100, but is not limited thereto. For example, the description of FIG. 9 may be also applied to a right portion of the electronic device 100 in which only a direction is different (e.g., the left portion and the right portion are disposed to face each other).

According to an embodiment, at least one elastic member 226 may be disposed inside the electronic device 100, in a state in which the gear member 220 is accommodated inside the electronic device 100. For example, the at least one elastic member 226 may be disposed between one surface of the gear member 220 and the cover 250. One end of the elastic member 226 may face one surface of the gear member 220, and the other end of the elastic member 226 may face an inner surface of the cover 250.

According to an embodiment, a position of the gear member 220 with respect to a second gear part 270A may be changed by an operation in which a user presses at least part of the gear member 220. For example, by an operation in which the user presses at least part of the protrusion structure 222 in a -y-axis direction, the at least one elastic member 226 may be compressed, and at least part of the gear member 220 may move in the -y-axis direction.

According to an embodiment, in a state in which the first member 110 is coupled to the second member 150, the at least part of the gear member 220 moves, whereby a gap may be generated between the first member 110 and the second member 150. For example, the at least part of the gear member 220 moves, whereby the at least one gear member 220 may be spaced apart from the second gear part 270A. The at least one gear member 220 is spaced apart from the second gear part 270A, whereby the plurality of protrusions 221 accommodated in the plurality of accommodating grooves 271 may be separated from the plurality of accommodating grooves 271.

According to an embodiment, the at least one gear member 220 is separated from the second gear part 270A, whereby the second member 150 may be separated from the first member 110. Or, the at least one gear member 220 is separated from the second gear part 270A, whereby the user may change a position at which the second member 150 is coupled to the first member 110. Accordingly, the user may adjust the distance from the at least one display 140 to the at least one lens 170.

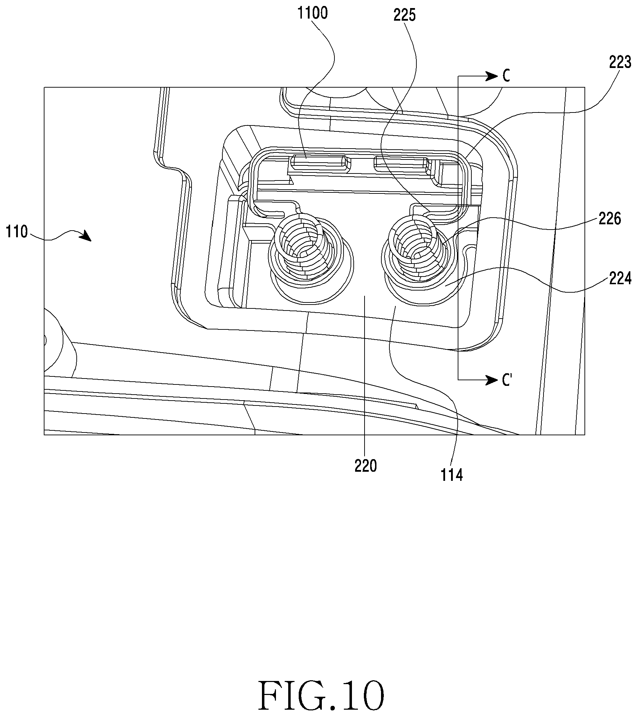

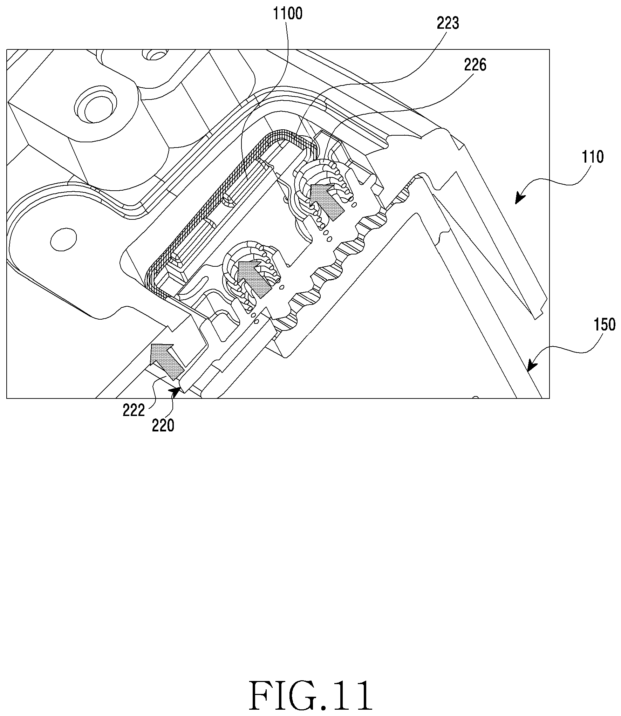

FIG. 10 is a perspective view illustrating a gear member 220 disposed on a first member 110, according to an embodiment. FIG. 11 is a cross-sectional perspective view illustrating the gear member 220 disposed on the first member 110, according to an embodiment.

The first member 110, the at least one gear member 220, at least one hinge structure 223, and at least one elastic member 226 of FIGS. 10 and 11 may be referred by the first member 110, the at least one gear member 220, the at least one hinge structure 223, and the at least one elastic member 226 of FIGS. 1 to 9. The same terms or the same reference numerals are used for components that are the same or substantially the same as those described above, and descriptions previously given are omitted.

According to an embodiment, the at least one hinge structure 223 may be disposed such that at least part (e.g., a first end or a second end (see the description of FIG. 7)) is rotatable with the gear member 220, and may be disposed such that at least another part (e.g., a first bar (see the description of FIG. 7)) is rotatable with the first member 110.

Referring to FIGS. 10 and 11, the at least one gear member 220 may be accommodated in a recess 114 provided inside the first member 110. The at least one hinge structure 223 may be disposed to be rotatable with respect to the first member 110 in a state in which the at least one gear member 220 is accommodated in the recess 114. For example, when the hinge structure 223 includes a ring shape (see the description of FIG. 7), the first bar of the hinge structure 223 may be fixed to be rotatable with respect to the first member 110.

Referring to FIG. 10, the first member 110 may include at least one protrusion part 1100 that protrudes in a direction in which an elastic member 226 is disposed in the recess 114 (or, when referring to FIG. 9, the direction in which, by the operation in which the user presses the at least part of the protrusion structure 222, the at least one elastic member 226 is compressed, and the at least part of the gear member 220 moves). At least part of the first bar of the hinge structure 223 is caught by the protrusion part 1100, whereby the hinge structure 223 may be disposed to be rotatable with respect to the first member 110.

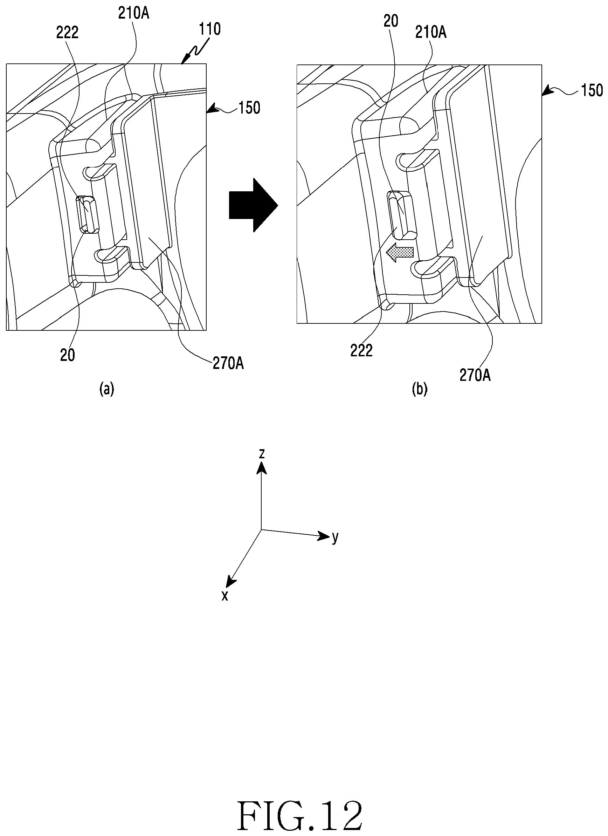

FIG. 12 is a perspective view illustrating a state in which a first member 110 on which a gear member including a protrusion structure 222 is disposed is coupled to a second member 150, according to an embodiment.

FIG. 12(b) is a perspective view illustrating a state in which at least part of the protrusion structure 222 is pressed in one direction in a state of FIG. 12 (a).

The first member 110 and the second member 150 of FIG. 12 may be referred by the first member 110 and the second member 150 of FIGS. 1 to 11. The same terms or the same reference numerals are used for components that are the same or substantially the same as those described above, and descriptions previously given are omitted.

According to an embodiment, at least part of the protrusion structure 222 of the gear member may be exposed to the outside of the electronic device. The protrusion structure 222 may be exposed to the outside of the electronic device through at least one opening part 20.

According to an embodiment, the width (e.g., a width in a y-axis direction) of the opening part 20 may be greater than the width of the protrusion structure 222. The protrusion structure 222 may move along a width direction (e.g., a y-axis direction) of the opening part 20. For example, when referring to FIG. 12(b), when the protrusion structure 222 moves in a -y-axis direction, the gear member may be spaced apart from at least one second gear part 270A. The gear member is spaced apart from the at least one second gear part 270A, whereby the second member 150 may be separated from the at least one first member 110. Also, the gear member is spaced apart from the at least one second gear part 270A, whereby the second member 150 may be easily guided along a guide groove of a first gear part. The second member 150 is guided along the guide groove, whereby the distance between at least one display and at least one lens may be adjusted.

According to an embodiment, when referring to FIG. 12(a), when the protrusion structure 222 moves in a +y-axis direction, the gear member may be coupled to the at least one second gear part 270A. The gear member is coupled to the at least one second gear part 270A, whereby the second member 150 may be fixed to the first member 110.

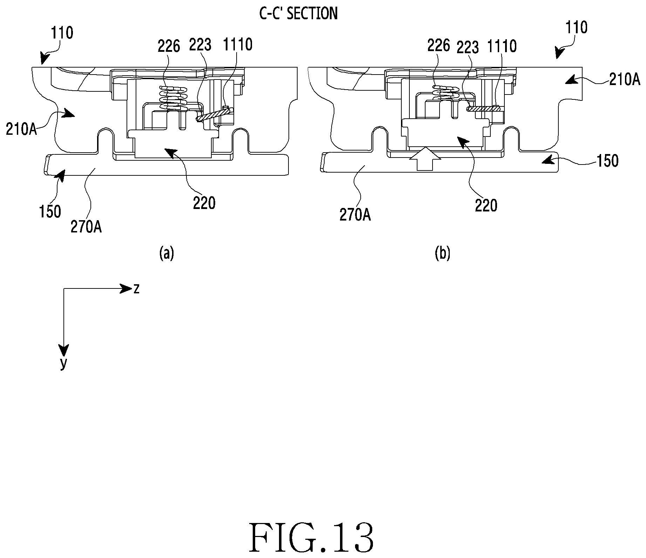

FIG. 13 is a cross-sectional view of FIG. 10. FIG. 13(a) is a cross-sectional view of an electronic device of the state of FIG. 12(a) taken along line C-C' of FIG. 10. FIG. 13(b) is a cross-sectional view of the electronic device of the state of FIG. 12(b) taken along line C-C' of FIG. 10.

A first member 110 and a second member 150 of FIG. 13 may be referred by the first member 110 and the second member 150 of FIGS. 1 to 12. The same terms or the same reference numerals are used for components that are the same or substantially the same as those described above, and descriptions previously given are omitted.

Referring to FIG. 13(a), a second gear part 270A is coupled to a first gear part 210A, whereby the second member 150 may be coupled to the first member 110. Referring to FIG. 13(b), when a protrusion structure (the protrusion structure 222 of FIG. 12) moves in a -y-axis direction in a state in which the second member 150 is coupled to the first member 110 (referring to FIG. 12(b)), at least one elastic member 226 may be compressed. When the protrusion structure (the protrusion structure 222 of FIG. 12) moves in the -y-axis direction in the state in which the second member 150 is coupled to the first member 110, at least part of the gear member 220 may move in a y-axis direction. For example, the gear member 220 may be spaced a certain gap apart from the second gear part 270A.

According to an embodiment, when the protrusion structure (the protrusion structure 222 of FIG. 12) moves in the -y-axis direction in a state in which the second member 150 is coupled to the first member 110 (e.g., when a user performs an operation of pressing the protrusion structure 222 in the -y-axis direction), the distance by which the gear member 220 is spaced apart from the second gear part 270A may vary depending on a region. For example, the gear member 220 may include a first region, and a second region closer to the protrusion structure 222 than the first region. When the protrusion structure (the protrusion structure 222 of FIG. 12) moves in the -y-axis direction in the state in which the second member 150 is coupled to the first member 110, the distance spaced apart from the second gear part 270A may be greater in the second region than in the first region (the seesaw operation principle). In an example, as the protrusion structure moves, one end of the gear member 220 at which the protrusion structure is formed may move in a direction in which the protrusion structure moves, and the other end of the gear member 220 may not move. In an example, as the protrusion structure moves, the one end of the gear member 220 at which the protrusion structure is formed may move a first distance, and the other end of the gear member 220 may move a second distance less than the first distance.

According to an embodiment, the electronic device may include at least one hinge structure 223 that includes one end disposed to be rotatable with the gear member 220 and the other end disposed to be rotatable with the first gear part 210A. The electronic device includes the hinge structure 223, whereby the distance by which the gear member 220 is spaced apart from the second gear part 270A may be the same. For example, when the protrusion structure (the protrusion structure 222 of FIG. 12) moves in the -y-axis direction in the state in which the second member 150 is coupled to the first member 110, the distance spaced apart from the second gear part 270A by the at least one hinge structure 223 may be the same in the first region and the second region. Accordingly, the user may easily separate the second member 150 from the first member 110, or easily adjust a coupling position of the second member 150 with respect to the first member 110. In an example, the electronic device includes the hinge structure 223, whereby, as the protrusion structure moves, one end of the gear member 220 at which the protrusion structure is formed and the other end may move in a direction in which the protrusion structure moves. In an example, the electronic device includes the hinge structure 223, whereby, as the protrusion structure moves, one end of the gear member 220 at which the protrusion structure is formed may move by a first distance, and the other end of the gear member 220 may also be moved by the first distance.

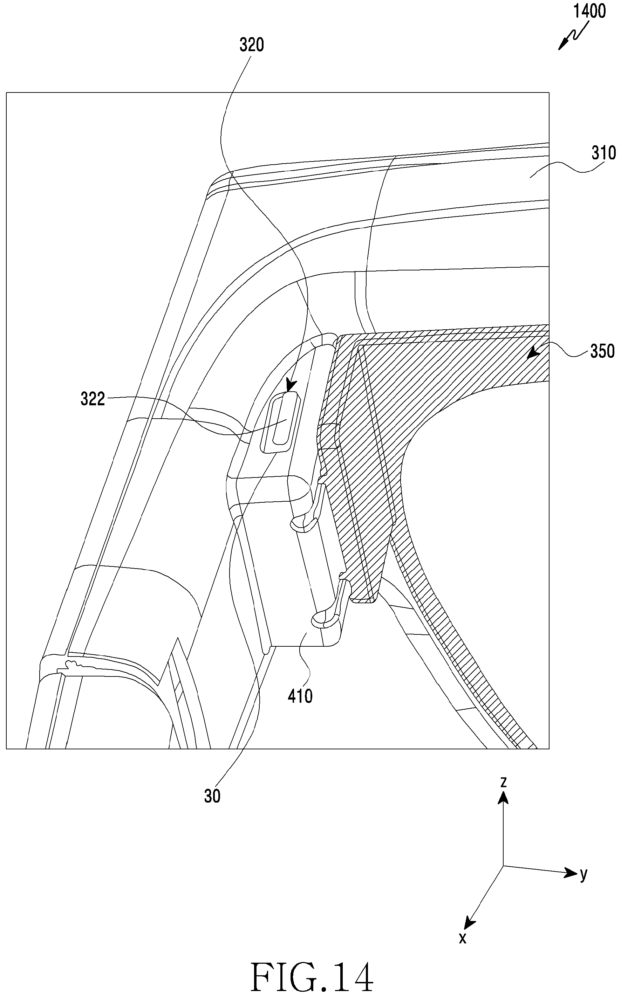

FIG. 14 is a perspective view illustrating a state in which a first member 310 on which a gear member 320 including a protrusion structure 322 is disposed is coupled to a second member 350, according to an embodiment.

The protrusion structure 322 of FIG. 14 may be referred by the protrusion structure 222 of FIGS. 2 to 13. The first member 310, the second member 350, and their components of FIG. 14 may be referred by the first member 110, the second member 150 and their components of FIGS. 1 to 13. The same terms are used for components that are the same or substantially the same as those described above, and descriptions previously given are omitted.

Referring to FIG. 14, at least part of the protrusion structure 322 of the gear member may be visible from the outside of an electronic device 1400. A first gear part 410 may include at least one opening part 30 at an upper end. The protrusion structure 322 may be visible from the outside of the electronic device 1400 through the at least one opening part 30. However, it is not limited to this. For example, the first gear part 410 may include at least one opening part at a lower end, or may also include the at least one opening part at all of the upper end and lower end. The protrusion structure may be visible from the outside of the electronic device 1400 through the at least one opening part.

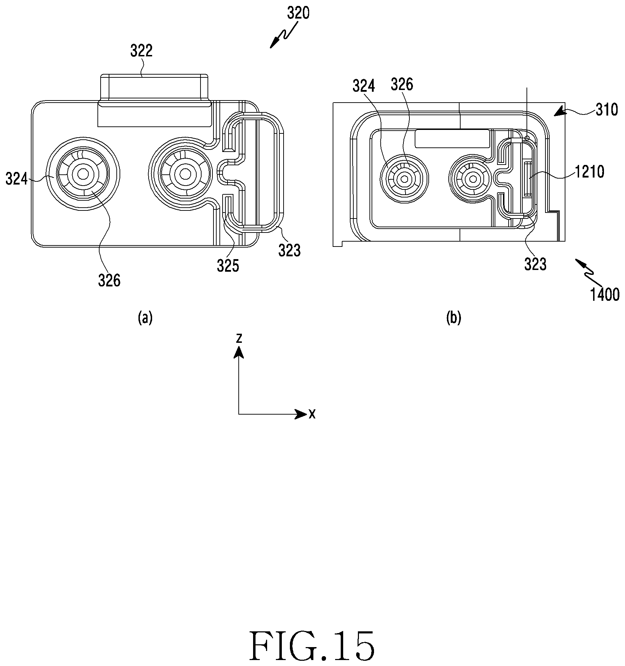

FIG. 15 is a plan view illustrating a gear member 320 including a protrusion structure 322 according to the embodiment of FIG. 14.

FIG. 15(a) may be a plan view illustrating one surface of the gear member 320 on which at least one elastic member 326 is disposed. FIG. 15(b) may be a plan view illustrating a state in which the gear member 320 is disposed on a first member 310.

An electronic device 1400 and the gear member 320 of FIG. 15 may be referred by the electronic device 1400 and the gear member 320 of FIG. 14. The hinge structure 323 of FIG. 15 may be referred by the hinge structure 223 of FIGS. 2 to 14. The same terms or the same reference numerals are used for components that are the same or substantially the same as those described above, and descriptions previously given are omitted.

Referring to FIG. 15(a), the gear member 320 according to an embodiment may include at least one seating part 325 on which at least one hinge structure 323 is disposed, and at least one seating groove 324 in which at least one elastic member 326 is disposed.

According to an embodiment, when at least one hinge structure 323 includes a ring shape (see the description of FIG. 7), at least one of a first end and a second end of the hinge structure 323 may be disposed on the at least one seating part 325. The first end and the second end are accommodated in the seating part 325, whereby the at least one hinge structure 323 may be fixed not to be separated from the gear member 320. The first end and the second end are accommodated in the seating part 325, whereby the at least one hinge structure 323 may rotate from the gear member 320.

According to an embodiment, the at least one hinge structure 323 may be disposed with a rotation axis direction given as a direction (e.g., a z-axis direction) in which the protrusion structure 322 protrudes. However, it is not limited to this.

According to an embodiment, the at least one elastic member 326 may be disposed in the at least one seating groove 324. The at least one seating groove 324 may include a shape corresponding to the shape of the at least one elastic member 326. For example, when the elastic member 326 has a circular spring shape, the at least one seating groove 324 may include a circular groove. However, it is not limited to this. For example, the elastic member 326 may include various shapes such as a square or an oval.

In FIG. 15, it is illustrated that two elastic members 326 are disposed on the gear member 320, but are not limited thereto. For example, one elastic member or three or more elastic members may be also disposed on the gear member 320.

According to an embodiment, the at least one elastic member 326 may include a spring or spring. However, it is not limited to this. For example, the at least one elastic member 326 may include materials having elasticity, such as a rubber or a coil.

Referring to FIG. 15(b), at least one gear member 320 may be accommodated in a recess provided inside the first member 310. The at least one hinge structure 323 may be disposed to be rotatable with respect to the first member 310 in a state in which the at least one gear member 320 is accommodated inside the recess. For example, when the hinge structure 323 includes a ring shape (see the description of FIG. 7), a first bar of the hinge structure 323 may be fixed to be rotatable with respect to the first member 310.

According to an embodiment, the first member 310 may include a protrusion part 1210 that protrudes within the recess in a direction in which the elastic member 326 is disposed. At least part of the first bar of the hinge structure 323 may be fixed to be rotatable with respect to the first member 310 by being at least partially caught by the protrusion part 1210.

According to an embodiment, the at least one hinge structure 323 may be disposed such that at least part (e.g., a first end or a second end (see the description of FIG. 7)) is rotatable with the gear member 320, and may be disposed such that at least another part (e.g., a first bar (see the description of FIG. 7)) is rotatable with the first member 310. However, it is not limited to this.

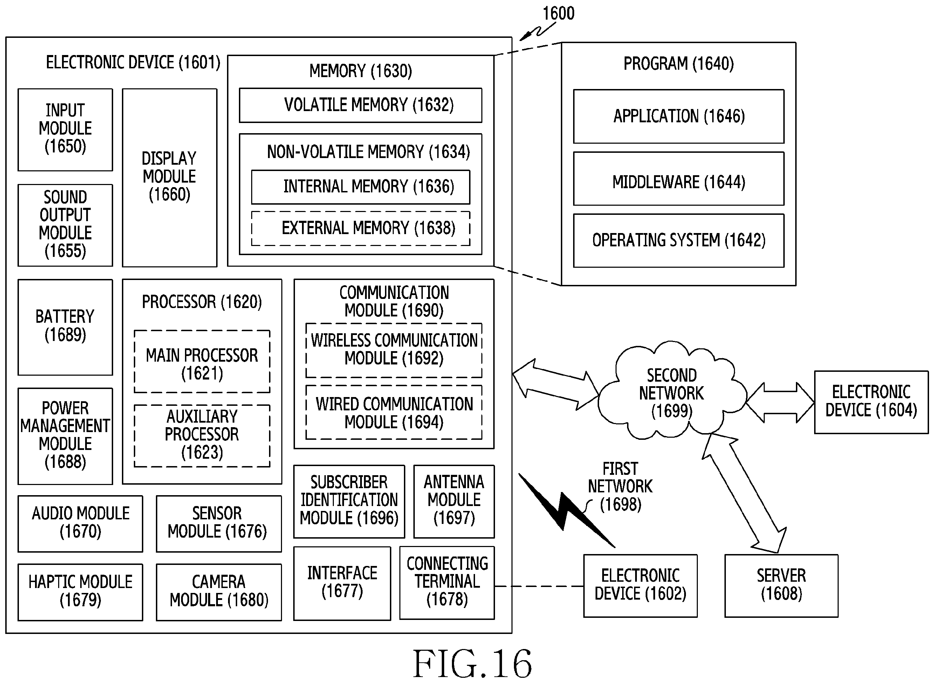

FIG. 16 is a block diagram of an electronic device 1601 in a network environment 1600 according to various embodiments.

The electronic device 1601 of FIG. 16 may be referred by the electronic device 100 of FIGS. 1 to 13 or the electronic device 1400 of FIGS. 14 to 15.

Referring to FIG. 16, in the network environment 1600, the electronic device 1601 may communicate with an electronic device 1602 through a first network 1698 (example: a short-range wireless communication network) or communicate with at least one of an electronic device 1604 or a server 1608 through a second network 1699 (example: a long-range wireless communication network). According to an embodiment, the electronic device 1601 may communicate with the electronic device 1604 through the server 1608. According to an embodiment, the electronic device 1601 may include a processor 1620, a memory 1630, an input module 1650, a sound output module 1655, a display module 1660, an audio module 1670, a sensor module 1676, an interface 1677, a connection terminal 1678, a haptic module 1679, a camera module 1680, a power management module 1688, a battery 1689, a communication module 1690, a subscriber identification module 1696, or an antenna module 1697. In some embodiment, at least one (example: the connection terminal 1678) of these components may be omitted or one or more other components may be added to the electronic device 1601. In some embodiment, some (example: the sensor module 1676, the camera module 1680, or the antenna module 1697) of these components may be integrated into one component (example: the display module 1660).

The processor 1620, for example, may execute software (example: program 1640) and control at least one other component (example: a hardware or software component) of the electronic device 1601 connected to the processor 1620, and may perform various data processing or operations. According to an embodiment, the processor 1620 may store commands or data received from another component (example: the sensor module 1676 or the communication module 1690) as at least part of the data processing or operation, in a volatile memory 1632, process the commands or data stored in the volatile memory 1632, and store the resulting data in a non-volatile memory 1634. According to an embodiment, the processor 1620 may include a main processor 1621 (example: a central processing unit or an application processor), or an auxiliary processor 1623 (example: a graphics processing unit, a neural processing unit (NPU), an image signal processor, a sensor hub processor, or a communication processor) operable independently of or together with this. For example, when the electronic device 1601 includes the main processor 1621 and the auxiliary processor 1623, the auxiliary processor 1623 may be set to use lower power than the main processor 1621 or be specialized for a specified function. The auxiliary processor 1623 may be implemented separately from the main processor 1621 or as a part thereof.

The auxiliary processor 1623 may, for example, control at least some of functions or states related to at least one (example: the display module 1660, the sensor module 1676, or the communication module 1690) of the components of the electronic device 1601, instead of the main processor 1621 while the main processor 1621 is in an inactive (example: sleep) state, or together with the main processor 1621 while the main processor 1621 is in an active (example: application execution) state. According to an embodiment, the auxiliary processor 1623 (example: the image signal processor or the communication processor) may be implemented as part of another functionally related component (example: the camera module 1680 or the communication module 1690). According to an embodiment, the auxiliary processor 1623 (example: the neural processing unit) may include a hardware structure specialized for processing an artificial intelligence model. The artificial intelligence model may be created through machine learning. This learning may be performed, for example, in the electronic device 1601 itself in which the artificial intelligence model is performed, or may be also performed through a separate server (example: the server 1608). A learning algorithm may include, for example, supervised learning, unsupervised learning, semi-supervised learning, or reinforcement learning, but is not limited to the above examples. The artificial intelligence model may include a plurality of artificial neural network layers. An artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), a deep Q-network, or a combination of two or more of the above, but is not limited to the above examples. The artificial intelligence model may additionally or alternatively include a software structure in addition to a hardware structure.

The memory 1630 may store various data used by at least one component (example: the processor 1620 or the sensor module 1676) of the electronic device 1601. The data may include, for example, software (example: the program 1640), and input data or output data for a command related to this. The memory 1630 may include the volatile memory 1632 or the non-volatile memory 1634.

The program 1640 may be stored as software in the memory 1630 and may include, for example, an operating system 1642, middleware 1644, or an application 1646.

The input module 1650 may receive a command or data to be used by a component (example: the processor 1620) of the electronic device 1601 from the outside (example: a user) of the electronic device 1601. The input module 1650 may include, for example, a microphone, a mouse, a keyboard, a key (example: a button), or a digital pen (example: a stylus pen).

The sound output module 1655 may output a sound signal to the outside of the electronic device 1601. The sound output module 1655 may include, for example, a speaker or a receiver. The speaker may be used for general purposes such as multimedia playback or record playback. The receiver may be used to receive an incoming call. According to an embodiment, the receiver may be implemented separately from the speaker or as a part thereof.

The display module 1660 may visually provide information to the outside (example: a user) of the electronic device 1601. The display module 1660 may include, for example, a display, a hologram device, or a projector, and a control circuit for controlling the device. According to an embodiment, the display module 1660 may include a touch sensor configured to detect a touch, or a pressure sensor configured to measure the intensity of force generated by the touch.

The audio module 1670 may convert sound into an electrical signal or, conversely, convert an electrical signal into sound. According to an embodiment, the audio module 1670 may acquire sound through the input module 1650, or output sound through the sound output module 1655 or an external electronic device (example: the electronic device 1602) (example: a speaker or a headphone) directly or wirelessly connected to the electronic device 1601.

The sensor module 1676 may detect an operating state (example: power or temperature) of the electronic device 1601 or an external environmental state (example: a user state), and generate an electrical signal or data value corresponding to the detected state. According to an embodiment, the sensor module 1676 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illumination sensor.

The interface 1677 may support one or more specified protocols that may be used to connect the electronic device 1601 directly or wirelessly with an external electronic device (example: the electronic device 1602). According to an embodiment, the interface 1677 may include, for example, a high definition multimedia interface (HDMI), a universal serial bus (USB) interface, an SD card interface, or an audio interface.

The connection terminal 1678 may include a connector through which the electronic device 1601 may be physically connected to an external electronic device (example: the electronic device 1602). According to an embodiment, the connection terminal 1678 may include, for example, an HDMI connector, a USB connector, an SD card connector, or an audio connector (example: a headphone connector).

The haptic module 1679 may convert an electrical signal into a mechanical stimulus (example: a vibration or movement) or electrical stimulus that a user may recognize through a tactile or kinesthetic sense. According to an embodiment, the haptic module 1679 may include, for example, a motor, a piezoelectric element, or an electrical stimulation device.

The camera module 1680 may capture still images and moving images. According to an embodiment, the camera module 1680 may include one or more lenses, image sensors, image signal processors, or flashes.

The power management module 1688 may manage power supplied to the electronic device 1601. According to an embodiment, the power management module 1688 may be, for example, implemented as at least a part of a power management integrated circuit (PMIC).

The battery 1689 may supply power to at least one component of the electronic device 1601. According to an embodiment, the battery 1689 may include, for example, a non-rechargeable primary cell, a rechargeable secondary cell, or a fuel cell.

The communication module 1690 may support the establishment of a direct (example: wired) communication channel or wireless communication channel between the electronic device 1601 and an external electronic device (example: the electronic device 1602, the electronic device 1604, or the server 1608), and the execution of communication through the established communication channel. The communication module 1690 may include one or more communication processors that operate independently of the processor 1620 (example: an application processor) and support direct (example: wired) communication or wireless communication. According to an embodiment, the communication module 1690 may include a wireless communication module 1692 (example: a cellular communication module, a short-range wireless communication module, or a global navigation satellite system (GNSS) communication module) or a wired communication module 1694 (example: a local area network (LAN) communication module or a power line communication module). Among these communication modules, the corresponding communication module may communicate with the external electronic device 1604 through the first network 1698 (example: a short-range communication network such as Bluetooth, wireless fidelity (WiFi) direct, or infrared data association (IrDA)) or the second network 1699 (example: a long-range communication network such as a legacy cellular network, a 5G network, a next-generation communication network, the Internet, or a computer network (example: LAN or WAN)). These various types of communication modules may be integrated into one component (example: a single chip) or may be implemented as a plurality of separate components (example: a plurality of chips). The wireless communication module 1692 may confirm or authenticate the electronic device 1601 within a communication network such as the first network 1698 or the second network 1699, by using subscriber information (example: International Mobile Subscriber Identifier (IMSI)) stored in the subscriber identification module 1696.

The wireless communication module 1692 may support beyond-4G 5G network and next-generation communication technologies, for example, new radio (NR) access technology. The NR access technology may support the highspeed transmission of high-capacity data (enhanced mobile broadband (eMBB)), the minimization of terminal power and the access of multiple terminals (massive machine type communications (mMTC)), or high reliability and low latency (ultra-reliable and low-latency communications (URLLC)). The wireless communication module 1692 may support high frequency bands (example: mmWave bands), for example, in order to achieve a high data rate. The wireless communication module 1692 may support various technologies for securing performance in high frequency bands, for example, technologies such as beamforming, massive multiple-input and multiple-output (MIMO), full dimensional MIMO (FD-MIMO), array antenna, analog beam-forming, or large scale antenna. The wireless communication module 1692 may support various requirements specified by the electronic device 1601, an external electronic device (example: the electronic device 1604), or a network system (example: the second network 1699). According to an embodiment, the wireless communication module 1692 may support a peak data rate (example: 20 Gbps or more) for realizing eMBB, loss coverage (example: 164 dB or less) for realizing mMTC, or U-plane latency (example: each of downlink (DL) and uplink (UL) of 0.5 ms or less, or a round trip of 1 ms or less) for realizing URLLC.

The antenna module 1697 may transmit or receive signals or power to or from the outside (example: an external electronic device). According to an embodiment, the antenna module 1697 may include an antenna that includes a radiator made of a conductor or conductive pattern formed on a substrate (example: a PCB). According to an embodiment, the antenna module 1697 may include a plurality of antennas (example: an array antenna). In this case, at least one antenna suitable for a communication method used in a communication network such as the first network 1698 or the second network 1699 may be selected from the plurality of antennas by, for example, the communication module 1690. Signals or power may be transmitted or received between the communication module 1690 and an external electronic device through the selected at least one antenna. According to some embodiment, other components (example: a radio frequency integrated circuit (RFIC)) in addition to a radiator may be formed as a part of the antenna module 1697.

According to various embodiments, the antenna module 1697 may form a mmWave antenna module. According to an embodiment, the mmWave antenna module may include a printed circuit board, an RFIC disposed on or adjacent to a first surface (example: a lower surface) of the printed circuit board and capable of supporting a specified high frequency band (example: a mmWave band), and a plurality of antennas (example: an array antenna) disposed on or adjacent to a second surface (example: an upper surface or side surface) of the printed circuit board and capable of transmitting or receiving signals of the specified high frequency band.

At least some of the components may be connected to each other through a communication method (example: a bus, a general purpose input and output (GPIO), a serial peripheral interface (SPI), or a mobile industry processor interface (MIPI)) between peripheral devices and exchange signals (example: commands or data) with each other.

According to an embodiment, the commands or data may be transmitted or received between the electronic device 1601 and the external electronic device 1604 through the server 1608 connected to the second network 1699. The external electronic device 1602 or 1604 each may be of the same or different type from the electronic device 1601. According to an embodiment, all or some of the operations performed by the electronic device 1601 may be executed by one or more of the external electronic devices 1602, 1604, or 1608. For example, when the electronic device 1601 needs to perform a certain function or service automatically or in response to a request from a user or another device, the electronic device 1601 may request one or more external electronic devices to perform at least part of the function or service, instead of or additionally to executing the function or service on its own. The one or more external electronic devices that have received the request may execute at least part of the requested function or service, or an additional function or service related to the request, and transmit the execution result to the electronic device 1601. The electronic device 1601 may process the result as it is or additionally, and provide it as at least part of a response to the request. For this purpose, for example, cloud computing, distributed computing, mobile edge computing (MEC), or client-server computing technology may be used. The electronic device 1601 may provide an ultra-low latency service by using, for example, distributed computing or mobile edge computing. In another embodiment, the external electronic device 1604 may include an Internet of things (IoT) device. The server 1608 may be an intelligent server that uses machine learning and/or a neural network. According to an embodiment, the external electronic device 1604 or the server 1608 may be included in the second network 1699. The electronic device 1601 may be applied to an intelligent service (example: a smart home, a smart city, a smart car, or healthcare), based on a 5G communication technology and an IoT related technology.

The electronic device according to various embodiments disclosed in this document may be various types of devices. The electronic device may include, for example, a portable communication device (example: a smartphone), a computer device, a portable multimedia device, a portable medical device, a camera, a wearable device, or a home appliance. The electronic device according to an embodiment of this document is not limited to the above-described devices.

Various embodiments of this document and terms used herein are not intended to limit the technical features described in this document to specific embodiments, but should be understood as including various modifications, equivalents, or alternatives of a corresponding embodiment. In relation to the description of the drawings, similar reference numbers may be used for similar or related components. The singular form of a noun corresponding to an item may include a single or plurality of items, unless the relevant context clearly indicates otherwise. As used herein, each of phrases such as "A or B", "at least one of A and B", "at least one of A or B", "A, B or C", "at least one of A, B and C", and "at least one of A, B, or C" may include any one of items listed together in a corresponding phrase among the phrases, or any possible combination thereof. Terms such as "first", "second", "firstly" or "secondly" may be used simply to distinguish one component from another component, and do not limit the corresponding components in other respects (example: importance or order). When some (example: first) component is mentioned to be "coupled" or "connected" to another (example: second) component, with or without the term "functionally" or "communicatively", it means that some component may be connected to another component directly (example: wiredly), wirelessly, or through a third component.

The term "module" used in the various embodiments of this document may include a unit implemented in hardware, software, or firmware, and may be used interchangeable with a term such as a logic, a logic block, a component, or a circuit, for example. The module may be an integrated component, or a minimum unit of the component or a part thereof performing one or more functions. For example, according to an embodiment, the module may be implemented in the form of an application-specific integrated circuit (ASIC).

Various embodiments of this document may be implemented as software (example: the program 1640) that includes one or more instructions stored in a storage medium (example: an internal memory 1636 or an external memory 1638) that may be read by a machine (example: the electronic device 1601). For example, a processor (example: the processor 1620) of the machine (example: the electronic device 1601) may call at least one instruction among the stored one or more instructions from the storage medium, and execute it. This enables the machine to be operated to perform at least one function according to the called at least one instruction. The one or more instructions may include a code generated by a compiler or a code executable by an interpreter. The machine-readable storage medium may be provided in the form of a non-transitory storage medium. Here, 'non-transitory' only means that the storage medium is a tangible device and does not include a signal (example: an electromagnetic wave). This term does not distinguish a case where data is stored semi-permanently in the storage medium and a case where data is stored temporarily.

According to an embodiment, a method according to various embodiments disclosed in this document may be included and provided in a computer program product. The computer program product may be traded as merchandise between a seller and a buyer. The computer program product may be distributed in the form of a machine-readable storage medium (example: compact disc read only memory (CD-ROM)), or may be distributed (example: downloaded or uploaded) through an application store (example: Play StoreTM), directly between two user devices (example: smartphones), or online. In the case of online distribution, at least part of the computer program product may be at least temporarily stored in the machine-readable storage medium such as a memory of a manufacturer's server, an application store's server, or a relay server, or be temporarily generated.

According to various embodiments, each component (example: a module or program) of the above-described components may include a single or plurality of entities, and some of the plurality of entities may be also separately disposed in another component. According to various embodiments, one or more of the components or operations described above may be omitted, or one or more other components or operations may be added. Alternatively or additionally, a plurality of components (example: modules or programs) may be integrated into a single component. In this case, the integrated component may perform one or more functions of each of the plurality of components, identically or similarly to those performed by the corresponding component among the plurality of components prior to the integration. According to various embodiments, operations performed by a module, program, or another component may be executed sequentially, in parallel, iteratively, or heuristically, or one or more of the operations may be executed in a different order or be omitted, or one or more other operations may be added.

As described above, a wearable electronic device according to an embodiment may include a first member including at least one display and at least one first gear part, and a second member configured to dispose at least one second gear part at least partially coupled to the at least one first gear part, and at least one prescription lens disposed between the at least one display and a user's body, and the second member may be disposed such that the distance between the at least one display and the at least one prescription lens is adjusted according to a position at which the at least one second gear part is coupled to the at least one first gear part.

According to an embodiment, the at least one first gear part may include at least one gear member including a plurality of protrusions on one surface, and the at least one second gear part may include a plurality of accommodating grooves accommodating at least some of the plurality of protrusions.

According to an embodiment, the at least one gear member may include the plurality of protrusions including a first region, and a second region closer to the plurality of accommodating grooves than the first region, and the thickness of the first region may be greater than the thickness of the second region.

According to an embodiment, the first gear part may include at least one recess accommodating at least part of the at least one gear member, and at least one opening part leading from the inside of the at least one recess to the outside of the electronic device, and the wearable electronic device may include at least one gear member disposed to be at least partially exposed to the outside of the electronic device through the at least one opening part.

According to an embodiment, the at least one gear member may be disposed such that the plurality of protrusions are exposed to the outside of the electronic device through the at least one opening part.

According to an embodiment, the wearable electronic device may include at least one gear member at least part of which is disposed inside the at least one first gear part, and include at least one elastic member disposed to be toward a direction in which the plurality of protrusions protrude, on a surface opposite to the one surface of the at least one gear member.

According to an embodiment, the at least one gear member may be disposed such that, in a state in which the at least one first gear part is coupled to the at least one second gear part, at least part of the at least one gear member is pressed in a direction in which the elastic member is compressed, whereby the at least one second gear part is spaced apart from the at least one first gear part.

According to an embodiment, the wearable electronic device may include at least one hinge structure, one end of which is disposed to be rotatable with respect to the at least one first gear part, and the other end of which is disposed to be rotatable with respect to the at least one gear member.

According to an embodiment, the wearable electronic device may include at least one gear member at least part of which is disposed inside the at least one first gear part, the at least part of the at least one gear member may include a protrusion structure that protrudes from one side of the at least one gear member, and the protrusion structure may be disposed to be at least partially exposed to the outside of the wearable electronic device.

According to an embodiment, the wearable electronic device may include at least one hinge structure disposed with a rotation axis direction given as a direction in which the protrusion structure protrudes.

According to an embodiment, the at least one second gear part may include a plurality of protrusions formed on one surface, and the at least one first gear part may include at least one gear member including a plurality of accommodating grooves that accommodate at least some of the plurality of protrusions.

According to an embodiment, the at least one second gear part may include at least one protrusion part, the at least one first gear part may include at least one guide groove that accommodates the at least one protrusion part, and the at least one guide groove may be disposed to guide the at least one protrusion part, in a state in which the second member is disposed to adjust the distance between the at least one display and the at least one prescription lens.

According to an embodiment, the at least one guide groove may be disposed with a longitudinal direction given as a direction from the at least one prescription lens toward the at least one display.

According to an embodiment, the wearable electronic device may be a glasses type device that is wearable on the head.

As described above, a wearable electronic device according to an embodiment may include a first member including a main frame including at least one display, a first extension part extending from one end of the main frame in a first direction and including a first gear part on one surface, and a second extension part extending from the other end of the main frame in the first direction and including a third gear part disposed to face the first gear part on one surface, and a second member is configured to dispose a second gear part at least partially coupled to the first gear part, a fourth gear part at least partially coupled to the third gear part, and at least one prescription lens disposed between the at least one display and a user's body, and the second member may be disposed such that the distance between the at least one display and the at least one prescription lens is adjusted according to at least one of a position at which the second gear part is coupled to the first gear part or a position at which the fourth gear part is coupled to the third gear part.

According to an embodiment, at least one of the first gear part or third gear part may include at least one gear member including a plurality of protrusions on one surface, and at least one of the second gear part or fourth gear part may include a plurality of accommodating grooves accommodating at least some of the plurality of protrusions.

According to an embodiment, the wearable electronic device may include at least one elastic member disposed to be toward a direction in which the plurality of protrusions protrude, on a surface opposite to the one surface of the at least one gear member.

According to an embodiment, the at least one gear member may be disposed such that, in a state in which the first member is coupled to the second member, at least part of the at least one gear member is pressed in a direction of compressing the at least one elastic member, whereby the second member is spaced apart from the first member.

According to an embodiment, the wearable electronic device may include at least one hinge structure, one end of which is disposed to be rotatable with respect to at least one of the first gear part or the third gear part, and the other end of which is disposed to be rotatable with respect to the at least one gear member.

According to an embodiment, the at least part of the at least one gear member may include a protrusion structure protruding from one side of the at least one gear member, the protrusion structure may be disposed to be at least partially exposed to the outside of the electronic device, and the at least one hinge structure may be disposed with a rotation axis direction given as a direction in which the protrusion structure protrudes.

## Claims

1. A wearable electronic device (100) comprising:
a first member (110) comprising at least one display (140); and
a second member (150) configured to dispose: at least one prescription lens (170A, 170B) disposed between the at least one
display and a user's body,
the wearable electronic device being **characterized in that** the first member comprises at least one gear part (210A);
the second member (150) is configured to dispose at least one second gear part (270A) at least partially coupled to the at least one first gear part; and **in that**
the second member is disposed such that the distance between the at least one display and the at least one prescription lens is adjusted according to a position at which the at least one second gear part is coupled to the at least one first gear part.

2. The wearable electronic device of claim 1, wherein the at least one first gear part comprises at least one gear member comprising a plurality of protrusions (221) on one surface, and
the at least one second gear part comprises a plurality of accommodating grooves (271) accommodating at least some of the plurality of protrusions.

3. The wearable electronic device of claim 2, wherein at least one of the plurality of protrusions comprises a first region, and a second region closer to the plurality of accommodating grooves than the first region, and
the thickness (W1) of the first region is greater than the thickness (W2) of the second region.

4. The wearable electronic device of claim 1, wherein the first gear part comprises at least one recess (114), and at least one opening part (10) leading from the inside of the at least one recess to the outside of the electronic device, and
comprising at least one gear member (220) accommodated in the at least one recess and disposed to be at least partially exposed to the outside of the electronic device through the at least one opening part.

5. The wearable electronic device of claim 4, wherein the at least one gear member comprises a plurality of protrusions, and
is disposed such that the plurality of protrusions are exposed to the outside of the electronic device through the at least one opening part.

6. The wearable electronic device of claim 1, comprising at least one gear member at least part of which is disposed inside the at least one first gear part and comprising a plurality of protrusions, and
comprising at least one elastic member (226) disposed to be toward a direction in which the plurality of protrusions protrude, on a surface opposite to one surface of at least one gear member.

7. The wearable electronic device of claim 6, wherein the at least one gear member is disposed such that, in a state in which the at least one first gear part is coupled to the at least one second gear part, at least part of the at least one gear member is pressed in a direction in which the elastic member is compressed, whereby the at least one second gear part is spaced apart from the at least one first gear part.

8. The wearable electronic device of claim 7, comprising at least one hinge structure (223) one end of which is disposed to be rotatable with respect to the at least one first gear part, and the other end of which is disposed to be rotatable with respect to the at least one gear member.

9. The wearable electronic device of claim 1, comprising at least one gear member at least part of which is disposed inside the at least one first gear part,
wherein the at least part of the at least one gear member comprises a protrusion structure that protrudes from one side of the at least one gear member, and
the protrusion structure is disposed to be at least partially exposed to the outside of the electronic device.

10. The wearable electronic device of claim 9, comprising at least one hinge structure disposed with a rotation axis direction given as a direction in which the protrusion structure protrudes.

11. The wearable electronic device of claim 1, wherein the at least one second gear part comprises a plurality of protrusions formed on one surface,
the at least one first gear part comprises at least one gear member comprising a plurality of accommodating grooves that accommodate at least some of the plurality of protrusions.

12. The wearable electronic device of claim 1, wherein the at least one second gear part comprises at least one protrusion part,
the at least one first gear part comprises at least one guide groove that accommodates the at least one protrusion part, and
the at least one guide groove is disposed to guide the at least one protrusion part, in a state in which the second member is disposed to adjust the distance between the at least one display and the at least one prescription lens.

13. The wearable electronic device of claim 12, wherein the at least one guide groove is disposed with a longitudinal direction given as a direction from the at least one prescription lens toward the at least one display.

14. The wearable electronic device of claim 1, wherein the wearable electronic device is a glasses type device that is wearable on the head.

15. The wearable electronic device of claim 1, wherein the first member comprises:
a main frame (111) comprising the at least one display;
a first extension (111A) part extending from one end of the main frame in a first direction and comprising the at least one first gear part on one surface; and
a second extension part (111B) extending from the other end of the main frame in the first direction and comprising a third gear part disposed to face the at least one first gear part on one surface,
the second member is configured to dispose:
the at least one second gear part (210B) at least partially coupled to the at least one first gear part;
a fourth gear part (270B) at least partially coupled to the third gear part; and
the at least one prescription lens disposed between the at least one display and the user's body, and
the second member is disposed such that the distance between the at least one display and the at least one prescription lens is adjusted according to at least one of a position at which the second gear part is coupled to the first gear part or a position at which the fourth gear part is coupled to the third gear part.

## Patentansprüche

1. Am Körper tragbare elektronische Vorrichtung (100), umfassend:
ein erstes Element (110), das mindestens eine Anzeige (140) umfasst; und
ein zweites Element (150), das dazu konfiguriert ist, Folgendes wie folgt anzuordnen:
mindestens eine verordnete Linse (170A, 170B) zwischen der mindestens einen Anzeige und einem Körper eines Benutzers angeordnet,
wobei die am Körper tragbare elektronische Vorrichtung **dadurch gekennzeichnet ist, dass** das erste Element mindestens ein Getriebeteil (210A) umfasst;
das zweite Element (150) dazu konfiguriert ist, mindestens ein zweites Getriebeteil (270A) anzuordnen, das mindestens teilweise an das mindestens eine erste Getriebeteil gekoppelt ist; und dadurch, dass
das zweite Element derart angeordnet ist, dass der Abstand zwischen der mindestens einen Anzeige und der mindestens einen verordneten Linse gemäß einer Position angepasst ist, an der das mindestens eine zweite Getriebeteil an das mindestens eine erste Getriebeteil gekoppelt ist.

2. Am Körper tragbare elektronische Vorrichtung nach Anspruch 1, wobei das mindestens eine erste Getriebeteil mindestens ein Getriebeelement umfasst, das eine Vielzahl von Vorsprüngen (221) auf einer Oberfläche umfasst, und das mindestens eine zweite Getriebeteil eine Vielzahl von Aufnahmenuten (271) umfasst, die mindestens einige der Vielzahl von Vorsprüngen aufnehmen.

3. Am Körper tragbare elektronische Vorrichtung nach Anspruch 2, wobei mindestens einer der Vielzahl von Vorsprüngen einen ersten Bereich und einen zweiten Bereich umfasst, der näher an der Vielzahl von Aufnahmenuten als der erste Bereich ist, und
die Dicke (W1) des ersten Bereichs größer als die Dicke (W2) des zweiten Bereichs ist.

4. Am Körper tragbare elektronische Vorrichtung nach Anspruch 1, wobei das erste Getriebeteil mindestens eine Vertiefung (114) und mindestens ein Öffnungsteil (10) umfasst, das von der Innenseite der mindestens einen Vertiefung zu der Außenseite der elektronischen Vorrichtung verläuft und mindestens ein Getriebeelement (220) umfasst, das in der mindestens einen Vertiefung aufgenommen und so angeordnet ist, dass es durch das mindestens eine Öffnungsteil mindestens teilweise zu der Außenseite der elektronischen Vorrichtung freiliegt.

5. Am Körper tragbare elektronische Vorrichtung nach Anspruch 4, wobei das mindestens eine Getriebeelement eine Vielzahl von Vorsprüngen umfasst und
derart angeordnet ist, dass die Vielzahl von Vorsprüngen durch das mindestens eine Öffnungsteil zu der Außenseite der elektronischen Vorrichtung freiliegt.

6. Am Körper tragbare elektronische Vorrichtung nach Anspruch 1, umfassend mindestens ein Getriebeelement, von dem mindestens ein Teil innerhalb des mindestens einen ersten Getriebeteils angeordnet ist und das eine Vielzahl von Vorsprüngen umfasst, und
umfassend mindestens ein elastisches Element (226), das so angeordnet ist, dass es zu einer Richtung, in der die Vielzahl von Vorsprüngen vorspringt, auf einer Oberfläche, die einer Oberfläche mindestens eines Getriebeelements gegenüberliegt, hin liegt.

7. Am Körper tragbare elektronische Vorrichtung nach Anspruch 6, wobei das mindestens eine Getriebeelement derart angeordnet ist, dass in einem Zustand, in dem das mindestens eine erste Getriebeteil an das mindestens eine zweite Getriebeteil gekoppelt ist, mindestens ein Teil des mindestens einen Getriebeelements in eine Richtung gedrückt wird, in der das elastische Element komprimiert wird, wodurch das mindestens eine zweite Getriebeteil von dem mindestens einen ersten Getriebeteil beabstandet ist.

8. Am Körper tragbare elektronische Vorrichtung nach Anspruch 7, umfassend mindestens eine Scharnierstruktur (223), wobei ein Ende davon so angeordnet ist, dass es in Bezug auf das mindestens eine erste Getriebeteil drehbar ist, und das andere Ende davon so angeordnet ist, dass es in Bezug auf das mindestens eine Getriebeelement drehbar ist.

9. Am Körper tragbare elektronische Vorrichtung nach Anspruch 1, umfassend mindestens ein Getriebeelement, wobei mindestens ein Teil davon innerhalb des mindestens einen ersten Getriebeteils angeordnet ist,
wobei der mindestens eine Teil des mindestens einen Getriebeelements eine Vorsprungstruktur umfasst, die von einer Seite des mindestens einen Getriebeelements vorspringt, und
die Vorsprungstruktur so angeordnet ist, dass sie mindestens teilweise zu der Außenseite der elektronischen Vorrichtung hin freiliegt.

10. Am Körper tragbare elektronische Vorrichtung nach Anspruch 9, umfassend mindestens eine Scharnierstruktur, die mit einer Rotationsachsenrichtung angeordnet ist, die als eine Richtung gegeben ist, in der die Vorsprungstruktur vorspringt.

11. Am Körper tragbare elektronische Vorrichtung nach Anspruch 1, wobei das mindestens eine zweite Getriebeteil eine Vielzahl von Vorsprüngen umfasst, die auf einer Oberfläche ausgebildet sind,
das mindestens eine erste Getriebeteil mindestens ein Getriebeelement umfasst, das eine Vielzahl von Aufnahmenuten umfasst, die mindestens einige der Vielzahl von Vorsprüngen aufnehmen.

12. Am Körper tragbare elektronische Vorrichtung nach Anspruch 1, wobei das mindestens eine zweite Getriebeteil mindestens ein Vorsprungsteil umfasst,
das mindestens eine erste Getriebeteil mindestens eine Führungsnut umfasst, die das mindestens eine Vorsprungsteil aufnimmt, und
die mindestens eine Führungsnut so angeordnet ist, dass sie das mindestens eine Vorsprungsteil in einem Zustand führt, in dem das zweite Element so angeordnet ist, dass es den Abstand zwischen der mindestens einen Anzeige und der mindestens einen verordneten Linse anpasst.

13. Am Körper tragbare elektronische Vorrichtung nach Anspruch 12, wobei die mindestens eine Führungsnut mit einer Längsrichtung angeordnet ist, die als eine Richtung von der mindestens einen verordneten Linse zu der mindestens einen Anzeige gegeben ist.

14. Am Körper tragbare elektronische Vorrichtung nach Anspruch 1, wobei die am Körper tragbare elektronische Vorrichtung eine Vorrichtung der Art Brille ist, die am Körper auf dem Kopf tragbar ist.

15. Am Körper tragbare elektronische Vorrichtung nach Anspruch 1, wobei das erste Element Folgendes umfasst:
ein Hauptgestell (111), das die mindestens eine Anzeige umfasst;
ein erstes Verlängerungsteil (111A), das sich von einem Ende des Hauptgestells in eine erste Richtung erstreckt und das mindestens eine erste Getriebeteil auf einer Oberfläche umfasst; und
ein zweites Verlängerungsteil (111B), das sich von dem anderen Ende des Hauptgestells in die erste Richtung erstreckt und ein drittes Getriebeteil umfasst, das so angeordnet ist, dass es dem mindestens einen ersten Getriebeteil auf einer Oberfläche zugewandt ist,
wobei das zweite Element dazu konfiguriert ist, Folgendes wie folgt anzuordnen:
das mindestens eine zweite Getriebeteil (210B) mindestens teilweise an das mindestens eine erste Getriebeteil gekoppelt;
ein viertes Getriebeteil (270B) mindestens teilweise an das dritte Getriebeteil gekoppelt; und
die mindestens eine verordnete Linse zwischen der mindestens einen Anzeige und dem Körper des Benutzers angeordnet, und
wobei das zweite Element derart angeordnet ist, dass der Abstand zwischen der mindestens einen Anzeige und der mindestens einen verordneten Linse gemäß mindestens einer von einer Position, an der das zweite Getriebeteil an das erste Getriebeteil gekoppelt ist, oder einer Position, an der das vierte Getriebeteil an das dritte Getriebeteil gekoppelt ist, angepasst ist.

## Revendications

1. Dispositif électronique habitronique (100) comprenant :
un premier élément (110) comprenant au moins un affichage (140) ;
et un second élément (150) configuré pour disposer :
au moins une lentille de prescription (170A, 170B) disposée entre l'au moins un affichage et le corps d'un utilisateur,
le dispositif électronique habitronique étant **caractérisé en ce que** le premier élément comprend au moins une partie d'engrenage (210A) ;
le second élément (150) est configuré pour disposer au moins une deuxième partie d'engrenage (270A) au moins partiellement couplée à l'au moins une première partie d'engrenage ; et **en ce que** le second élément est disposé de telle sorte que la distance entre l'au moins un affichage et l'au moins une lentille de prescription soit ajustée en fonction d'une position à laquelle l'au moins une deuxième partie d'engrenage est couplée à l'au moins une première partie d'engrenage.

2. Dispositif électronique habitronique selon la revendication 1, dans lequel l'au moins une première partie d'engrenage comprend au moins un élément d'engrenage comprenant une pluralité de saillies (221) sur une surface, et
l'au moins une deuxième partie d'engrenage comprend une pluralité de rainures de réception (271) recevant au moins certaines de la pluralité de saillies.

3. Dispositif électronique habitronique selon la revendication 2, dans lequel au moins une de la pluralité de saillies comprend une première région et une seconde région plus proche de la pluralité de rainures de réception que la première région, et
l'épaisseur (W1) de la première région est supérieure à l'épaisseur (W2) de la seconde région.

4. Dispositif électronique habitronique selon la revendication 1, dans lequel la première partie d'engrenage comprend au moins un évidement (114), et au moins une partie d'ouverture (10) menant de l'intérieur de l'au moins un évidement vers l'extérieur du dispositif électronique, et comprenant au moins un élément d'engrenage (220) reçu dans l'au moins un évidement et disposé pour être au moins partiellement découvert à l'extérieur du dispositif électronique à travers l'au moins une partie d'ouverture.

5. Dispositif électronique habitronique selon la revendication 4, dans lequel l'au moins un élément d'engrenage comprend une pluralité de saillies, et
est disposé de telle sorte que la pluralité de saillies soient découvertes à l'extérieur du dispositif électronique à travers l'au moins une partie d'ouverture.

6. Dispositif électronique habitronique selon la revendication 1, comprenant au moins un élément d'engrenage dont au moins une partie est disposée à l'intérieur de l'au moins une première partie d'engrenage et comprenant une pluralité de saillies, et
comprenant au moins un élément élastique (226) disposé pour être orienté dans une direction dans laquelle la pluralité de saillies font saillie, sur une surface opposée à une surface d'au moins un élément d'engrenage.

7. Dispositif électronique habitronique selon la revendication 6, dans lequel l'au moins un élément d'engrenage est disposé de telle sorte que, dans un état dans lequel l'au moins une première partie d'engrenage est couplée à l'au moins une deuxième partie d'engrenage, au moins une partie de l'au moins un élément d'engrenage soit pressée dans une direction dans laquelle l'élément élastique est comprimé, moyennant quoi l'au moins une deuxième partie d'engrenage est espacée de l'au moins une première partie d'engrenage.

8. Dispositif électronique habitronique selon la revendication 7, comprenant au moins une structure de charnière (223) dont une extrémité est disposée pour être rotative par rapport à l'au moins une première partie d'engrenage, et dont l'autre extrémité est disposée pour être rotative par rapport à l'au moins un élément d'engrenage.

9. Dispositif électronique habitronique selon la revendication 1, comprenant au moins un élément d'engrenage dont au moins une partie est disposée à l'intérieur de l'au moins une première partie d'engrenage, dans lequel l'au moins une partie de l'au moins un élément d'engrenage comprend une structure en saillie qui fait saillie depuis un côté de l'au moins un élément d'engrenage, et
la structure de saillie est disposée pour être au moins partiellement découverte à l'extérieur du dispositif électronique.

10. Dispositif électronique habitronique selon la revendication 9, comprenant au moins une structure de charnière disposée avec une direction d'axe de rotation donnée en tant que direction dans laquelle la structure de saillie fait saillie.

11. Dispositif électronique habitronique selon la revendication 1, dans lequel l'au moins une deuxième partie d'engrenage comprend une pluralité de saillies formées sur une surface,
l'au moins une première partie d'engrenage comprend au moins un élément d'engrenage comprenant une pluralité de rainures de réception qui reçoivent au moins certaines de la pluralité de saillies.

12. Dispositif électronique habitronique selon la revendication 1, dans lequel l'au moins une deuxième partie d'engrenage comprend au moins une partie en saillie,
l'au moins une première partie d'engrenage comprend au moins une rainure de guidage qui reçoit l'au moins une partie en saillie, et
l'au moins une rainure de guidage est disposée pour guider l'au moins une partie en saillie, dans un état dans lequel le second élément est disposé pour ajuster la distance entre l'au moins un affichage et l'au moins une lentille de prescription.

13. Dispositif électronique habitronique selon la revendication 12, dans lequel l'au moins une rainure de guidage est disposée avec une direction longitudinale donnée en tant que direction depuis l'au moins une lentille de prescription vers l'au moins un affichage.

14. Dispositif électronique habitronique selon la revendication 1, dans lequel le dispositif électronique habitronique est un dispositif de type lunettes qui peut être porté sur la tête.

15. Dispositif électronique habitronique selon la revendication 1, dans lequel le premier élément
comprend :
un cadre principal (111) comprenant l'au moins un affichage :
une première partie d'extension (111A) s'étendant à partir d'une extrémité du cadre principal dans une première direction et comprenant l'au moins une première partie d'engrenage sur une surface ; et
une deuxième partie d'extension (111B) s'étendant à partir de l'autre extrémité du cadre principal dans la première direction et comprenant une troisième partie d'engrenage disposée pour faire face à l'au moins une première partie d'engrenage sur une surface,
le second élément est configuré pour disposer :
l'au moins une deuxième partie d'engrenage (210B) au moins partiellement couplée à l'au moins une première partie d'engrenage ;
une quatrième partie d'engrenage (270B) au moins partiellement couplée à la troisième partie d'engrenage ; et
l'au moins une lentille de prescription disposée entre l'au moins un affichage et le corps de l'utilisateur, et le second élément est disposé de telle sorte que la distance entre l'au moins un affichage et l'au moins une lentille de prescription soit ajustée en fonction d'au moins une d'une position à laquelle la deuxième partie d'engrenage est couplée à la première partie d'engrenage ou d'une position à laquelle la quatrième partie d'engrenage est couplée à la troisième partie d'engrenage.
